(19) Europäisches Patentamt
European Patent Office
Office européen des brevets

(11) EP 4 772 571 A1

(12) EUROPEAN PATENT APPLICATION
published in accordance with Art. 153(4) EPC

(43) Date of publication:
**08.07.2026 Bulletin 2026/28**

(21) Application number: **24859942.5**

(22) Date of filing: **30.08.2024**

(51) International Patent Classification (IPC):
***C08L 21/00*** (2006.01) ***B60C 1/00*** (2006.01)
***C08J 3/20*** (2006.01) ***C08L 1/02*** (2006.01)

(52) Cooperative Patent Classification (CPC):
**B60C 1/00; C08J 3/20; C08L 1/02; C08L 21/00**

(86) International application number:
**PCT/JP2024/031094**

(87) International publication number:
**WO 2025/047917 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.08.2023 JP 2023141719**
**24.10.2023 JP 2023182320**
**09.05.2024 JP 2024076323**

(71) Applicant: **Oji Holdings Corporation**
**Chuo-ku**
**Tokyo 104-0061 (JP)**

(72) Inventors:
- **SATO, Miho**
  **Tokyo 104-0061 (JP)**
- **YAMANAKA, Mio**
  **Tokyo 104-0061 (JP)**
- **ISOGAI, Takuya**
  **Tokyo 104-0061 (JP)**

(74) Representative: **Godemeyer Blum Lenze Patentanwälte**
**Partnerschaft mbB - werkpatent**
**An den Gärten 7**
**51491 Overath (DE)**

# (54) RUBBER COMPOSITION AND CROSSLINKED RUBBER PRODUCT

(57) The purpose of the present invention is to provide a rubber composition having excellent kneadability as well as having exceptional physical properties, such as hardness and tensile properties, after crosslinking.

A rubber composition according to the present invention contains a rubber component and fine fibrous cellulose having a fiber width of 1,000 nm or less. The rubber composition has a water content of 15% or lower. In a sheet composed of the rubber composition, the value obtained by dividing the piercing strength (N) by the thickness (mm) is 3 N/mm or greater. Additionally, in a sheet composed of the rubber composition, the value obtained by dividing the piercing elongation (mm) by the thickness (mm) is 400 or less.



Processed by Luminess, 75001 PARIS (FR)

## Description

### Technical Field

The present invention relates to a rubber composition and a method for producing the same, a method for producing a rubber compound, and a crosslinked rubber product and a method for producing the same.

### Background Art

In recent years, materials using reproducible natural fibers have attracted attention due to increased awareness of alternatives to petroleum resources and environmental consciousness. Among natural fibers, fibrous cellulose having a fiber diameter of 10 μm or more and 50 μm or less, particularly wood-derived fibrous cellulose (pulp) has been widely used mainly as paper products so far.

As the fibrous cellulose, fine fibrous cellulose having an average fiber width of 1,000 nm or less is also known. Fine fibrous cellulose has attracted attention as new materials, and its applications are diverse. For example, sheets, resin composites, and thickeners containing fine fibrous cellulose have been developed. Also, studies have been made on composite materials of fine fibrous cellulose and a resin emulsion and/or a rubber latex.

Cited Literature 1 discloses a composition containing a base rubber, a maleic anhydride-modified polymer, and non-chemically modified and non-modified cellulose nanofibers, for the purpose of providing a composition in which cellulose nanofibers are defibrated and dispersed and which can produce a crosslinked rubber having excellent tensile properties.

In addition, Patent Literature 2 discloses a polymer composition containing: (I) a polymer; (II) a nanocellulose dispersion composition (NDC) containing: (i) an anti-agglomerate containing a carbon black filler, an elastomer latex, a wax, or any combination thereof; and (ii) nanocellulose; and (III) a carbon black additive, for the purpose of providing a method for significantly improving the dispersibility of nanocellulose in a polymer blend.

### Citation List

#### Patent Literature

Patent Literature 1: JP 2021-123639 A
Patent Literature 2: JP 2022-508946 A

### Summary of Invention

#### Technical Problem

Cited Literatures 1 and 2 disclose compositions containing a cellulose nanofiber, an elastomer, a base rubber, and the like. However, in Cited Literatures 1 and 2, physical properties and kneadability of the composition have not been studied, and there is room for improvement. Further improvement in physical properties of the crosslinked rubber after crosslinking has been required.

An object of the present invention is to provide a rubber composition having good kneadability as well as having excellent physical properties, such as hardness and tensile properties, after crosslinking. Another object of the present invention is to provide a crosslinked rubber product obtained by crosslinking and molding a rubber compound containing the rubber composition and a crosslinking agent. A still another object of the present invention is to provide a method for producing a rubber composition having good kneadability and excellent physical properties such as hardness and tensile properties after crosslinking, a method for producing a rubber compound containing the rubber composition, and a method for producing a crosslinked rubber product obtained by crosslinking and molding the rubber compound.

#### Solution to Problem

The present inventors have found that the above problems can be solved by setting the water content of the rubber composition to a specific value or less, setting the value obtained by dividing the piercing strength by the thickness to a specific value or more, and setting the value obtained by dividing the piercing elongation by the thickness to a specific value or more in a sheet composed of the rubber composition.

The present invention relates to the following <1> to <11>.

<1> A rubber composition containing: a rubber component; and a fine fibrous cellulose having a fiber width of 1,000 nm or less, wherein the rubber composition has a water content of 15% or less, in a sheet composed of the rubber composition, a value obtained by dividing a piercing strength (N) by a thickness (mm) is 3 N/mm or more, and in the sheet composed of the rubber composition, a value obtained by dividing a piercing elongation (mm) by the thickness (mm) is 400 or less.

<2> The rubber composition according to <1>, wherein the sheet composed of the rubber composition has a hardness of 40 or more as measured in accordance with JIS K 6253-3:2012.

<3> The rubber composition according to <1> or <2>, wherein a content of the fine fibrous cellulose based on 100 parts by mass of the rubber component in the rubber composition is 1 part by mass or more and 200 parts by mass or less.

<4> The rubber composition according to any one of <1> to <3>, further containing a coarse cellulose fiber having a fiber width of more than 1 μm.

<5> The rubber composition according to any one of <1> to <4>, wherein the rubber composition has a water content of 5% or less.

<6> The rubber composition according to any one of <1> to <5>, wherein the sheet composed of the rubber composition has a thickness of 1 μm or more and 5,000 μm or less.

<7> A crosslinked rubber product obtained by crosslinking and molding a rubber compound containing the rubber composition according to any one of <1> to <6> and a crosslinking agent.

<8> The crosslinked rubber product according to <7>, wherein the crosslinked rubber product is a tire.

<9> A method for producing a rubber composition, including: a mixing step of mixing an aqueous dispersion of a fine fibrous cellulose having a fiber width of 1,000 nm or less with a rubber latex to obtain a dispersion containing a fine fibrous cellulose and a rubber component; and a drying step of heating and drying the dispersion to obtain a rubber composition, wherein the rubber composition has a water content of 15% or less, in a sheet composed of the rubber composition, a value obtained by dividing a piercing strength (N) by a thickness (mm) is 3 N/mm or more, and in the sheet composed of the rubber composition, a value obtained by dividing a piercing elongation (mm) by the thickness (mm) is 400 or less.

<10> A method for producing a rubber compound, including a kneading step of kneading a rubber composition obtained by the production method according to <9> and a crosslinking agent.

<11> A method for producing a crosslinked rubber product, including a crosslinking step of crosslinking and molding a rubber compound obtained by the production method according to <10>.

## Advantageous Effects of Invention

According to the present invention, there is provided a rubber composition having good kneadability and excellent physical properties such as hardness and tensile properties after crosslinking. According to the present invention, there is also provided a crosslinked rubber product obtained by crosslinking and molding a rubber compound containing the rubber composition and a crosslinking agent. Furthermore, according to the present invention, there are provided a method for producing a rubber composition having good kneadability and excellent physical properties such as hardness and tensile properties after crosslinking, a method for producing a rubber compound containing the rubber composition, and a method for producing a rubber product obtained by crosslinking and molding the rubber compound.

## Brief Description of Drawings

Fig. 1 is a graph illustrating a relationship between the amount of NaOH added dropwise to a slurry containing a fine fibrous cellulose having a phosphorus oxoacid group and pH.

Fig. 2 is a graph illustrating a relationship between the amount of NaOH added dropwise to a slurry containing a fibrous cellulose having a carboxy group and pH.

Fig. 3 is a schematic side cross-sectional view of a double drum dryer as an example of a heated cylindrical dryer.

Fig. 4 is a schematic side view of the double drum dryer as an example of a heated cylindrical dryer.

## Description of Embodiments

### [Rubber composition]

A rubber composition of the present embodiment contains a rubber component and a fine fibrous cellulose having a fiber width of 1,000 nm or less (hereinafter, also simply referred to as "fine fibrous cellulose"), wherein the rubber composition has a water content of 15% or less, in a sheet composed of the rubber composition, the value obtained by

dividing the piercing strength (N) by the thickness (mm) is 3 N/mm or more, and in the sheet composed of the rubber composition, the value obtained by dividing the piercing elongation (mm) by the thickness (mm) is 400 or less.

The rubber composition of the present embodiment has good kneadability, and excellent physical properties such as hardness and tensile properties of a crosslinked product after crosslinking the rubber composition. The good kneadability means that the kneading time until the rubber composition is wound around the kneading roll is short.

Conventionally, it has been difficult to evaluate whether kneadability is good in the state of a rubber composition, and it has been difficult to predict the physical properties of a crosslinked product to be obtained.

As a result of intensive studies, the present inventors have found that in a rubber composition containing fine fibrous cellulose and rubber, the rubber composition has a water content of 15% or less, in a sheet composed of the rubber composition, the value obtained by dividing the piercing strength (N) by the thickness (mm) is 3 N/mm or more, and in the sheet composed of the rubber composition, the value obtained by dividing the piercing elongation (mm) by the thickness (mm) is 400 or less, whereby kneadability is good, and physical properties such as hardness and tensile properties after crosslinking of the rubber composition are excellent.

Although the detailed reason why the above effect can be obtained is unknown, it is considered that when the rubber composition has a water content of 15% or less, the amount of water in the rubber composition is appropriate, and thus the rubber composition exhibits excellent kneadability. In addition, it is considered that, by setting the value obtained by dividing the piercing strength by the thickness to a specific value or more and setting the value obtained by dividing the piercing elongation by the thickness to a specific value or less, the dispersibility of the fine fibrous cellulose and the rubber component in the rubber composition is good, and when the rubber composition is crosslinked, a crosslinked product exhibiting high tensile strength, moderate tensile elongation, and high fracture energy is obtained.

In the present embodiment, in the crosslinked rubber or the crosslinked rubber product obtained by crosslinking the rubber composition, having high tensile strength, moderate tensile elongation, and high fracture energy is also referred to as having excellent physical properties.

The present invention will be described in detail below.

[Fine fibrous cellulose]

The rubber composition of the present embodiment contains a fine fibrous cellulose.

The fine fibrous cellulose is not particularly limited, and a known fine fibrous cellulose can be used.

The upper limit value of the fiber width of the fine fibrous cellulose is 1,000 nm or less, preferably 100 nm or less, more preferably 50 nm or less, still more preferably 20 nm or less, and further still more preferably 10 nm or less.

As described later, the rubber composition may contain a cellulose fiber having a fiber width of more than 1 μm (1,000 nm) (hereinafter, also referred to as "coarse cellulose fiber").

The average fiber width of the fine fibrous cellulose is, for example, 1,000 nm or less. The average fiber width of the fibrous cellulose is, for example, preferably 2 nm or more and 1,000 nm or less, more preferably 2 nm or more and 100 nm or less, still more preferably 2 nm or more and 50 nm or less, and further still more preferably 2 nm or more and 10 nm or less. Note that the fine fibrous cellulose is, for example, a monofilamentous cellulose.

The fiber width of the fine fibrous cellulose is measured as follows using, for example, an electron microscope. First, an aqueous suspension of a fine fibrous cellulose having a concentration of 0.05% by mass or more and 0.1% by mass or less is prepared, and the suspension is cast onto a carbon membrane-coated grid subjected to a hydrophilization treatment to obtain a sample for TEM observation. When the fine fibrous cellulose includes a wide fiber, an SEM image on a surface of glass onto which the suspension has been cast may be observed. Next, observation with an electron microscope image is performed at a magnification of 1,000 times, 5,000 times, 10,000 times, or 50,000 times depending on the width of a fiber to be observed. Note that a sample, observation conditions, and magnification are adjusted so as to satisfy the following conditions.

(1) One straight line X is drawn at an arbitrary position in an observation image, and 20 or more fibers intersect the straight line X.
(2) A straight line Y perpendicularly intersecting the straight line is drawn in the same image, and 20 or more fibers intersect the straight line Y.

For an observation image satisfying the above conditions, the width of a fiber intersecting the straight line X and the straight line Y is visually read. In this way, at least three or more sets of observation images of surface portions not overlapping each other are obtained. Next, for each image, the width of a fiber intersecting the straight line X and the straight line Y is read. As a result, the fiber widths of at least 20 fibers × 2 × 3 = 120 fibers are read. Then, an average value of the read fiber widths is defined as a number average fiber width of the fine fibrous cellulose.

The fiber length of the fine fibrous cellulose is not particularly limited, but is, for example, preferably 0.1 μm or more and 1,000 μm or less, more preferably 0.1 μm or more and 800 μm or less, and still more preferably 0.1 μm or more

and 600 μm or less. By setting the fiber length within the above range, destruction of a crystalline region of the fine fibrous cellulose can be suppressed. The fiber length of the fine fibrous cellulose can be measured by image analysis using, for example, TEM, SEM, or AFM.

The fine fibrous cellulose preferably has a type I crystal structure. Here, the presence of the type I crystal structure of the fine fibrous cellulose can be identified in a diffraction profile which is obtained from a wide-angle X-ray diffraction photograph using CuKα (λ = 1.5418 Å) monochromatized with graphite. Specifically, the type I crystal structure can be identified by having typical peaks at two positions in the vicinity of 2θ = 14° or more and 17° or less and in the vicinity of 2θ = 22° or more and 23° or less. The ratio of the type I crystal structure in the fine fibrous cellulose is, for example, preferably 30% or more, more preferably 40% or more, and still more preferably 50% or more. A crystallinity can be determined by a conventional method from a pattern of an X-ray diffraction profile which has been measured (Seagal et al., Textile Research Journal, vol. 29, p. 786, 1959).

The axial ratio (fiber length/fiber width) of the fine fibrous cellulose is not particularly limited, but is, for example, preferably 50 or more and 10,000 or less, and more preferably 100 or more and 1,000 or less. By setting the axial ratio to the above lower limit value or more, it becomes easy to form a rubber composition containing a fine fibrous cellulose. By setting the axial ratio to the above upper limit value or less, for example, when the fine fibrous cellulose is treated as a dispersion, handling such as dilution is easily performed, which is preferable.

In the present embodiment, the fine fibrous cellulose has, for example, both a crystalline region and an amorphous region. The fine fibrous cellulose having both a crystalline region and an amorphous region as well as having an axial ratio within the above range is realized by a method for producing a fine fibrous cellulose described later.

In the present embodiment, the fine fibrous cellulose preferably has an ionic substituent. Examples of the ionic substituent include one or both of an anionic group and a cationic group. In the present embodiment, the fine fibrous cellulose particularly preferably has an anionic group as an ionic substituent. In addition, the ionic substituent is preferably a group introduced into the fine fibrous cellulose via an ester bond or an ether bond, and more preferably a group introduced into the fine fibrous cellulose via an ester bond. In this case, the ester bond is preferably formed through dehydration condensation of the fine fibrous cellulose and a compound serving as an ionic substituent.

Examples of the anionic group as the ionic group include a phosphorus oxoacid group or a substituent derived from a phosphorus oxoacid group (also simply referred to as a phosphorus oxoacid group), a carboxy group or a substituent derived from a carboxy group (also simply referred to as a carboxy group), a sulfur oxoacid group or a substituent derived from a sulfur oxoacid group (also simply referred to as a sulfur oxoacid group), a xanthate group or a substituent derived from a xanthate group (also simply referred to as a xanthate group), a phosphonate group or a substituent derived from a phosphonate group, a phosphine group or a substituent derived from a phosphine group, a sulfonic acid group or a substituent derived from a sulfonic acid group, and a carboxyalkyl group. Among them, the anionic group is preferably at least one selected from the group consisting of a phosphorus oxoacid group, a substituent derived from a phosphorus oxoacid group, a carboxy group, a sulfur oxoacid group, a substituent derived from a sulfur oxoacid group, a carboxymethyl group, a carboxyethyl group, and a sulfonic acid group; more preferably at least one selected from the group consisting of a phosphorus oxoacid group, a substituent derived from a phosphorus oxoacid group, a carboxy group, a sulfur oxoacid group, and a substituent derived from a sulfur oxoacid group; and still more preferably a phosphorus oxoacid group. By introducing a phosphorus oxoacid group as an anionic group, for example, the dispersibility of the fine fibrous cellulose can be further enhanced even under alkaline conditions or acidic conditions, and as a result, a sheet excellent in hardness, strength, and elongation is easily obtained.

Examples of the cationic group as the ionic group include an ammonium group, a phosphonium group, and a sulfonium group. Among them, the cationic group is preferably an ammonium group.

The phosphorus oxoacid group or the substituent derived from the phosphorus oxoacid group is, for example, a substituent represented by the following formula (1). A plurality of substituents represented by the following formula (1) may be introduced into the fine fibrous cellulose. In this case, a plurality of substituents represented by the following formula (1) to be introduced may be the same or different.

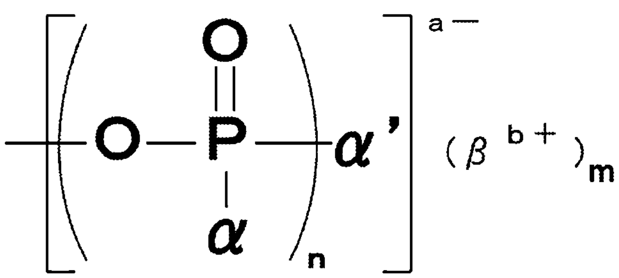

(1)

In the formula (1), a, b, and n are natural numbers, and m is any number (provided that a = b × m). At least one of n

αs and α' is $O^-$, and the remaining αs and α' are R or OR. Note that all αs and α' may be $O^-$. All n αs may be the same or different. $\beta^{b+}$ is a monovalent or higher valent cation formed of an organic substance or an inorganic substance.

Rs are each a hydrogen atom, a saturated-linear chain hydrocarbon group, a saturated-branched chain hydrocarbon group, a saturated-cyclic hydrocarbon group, an unsaturated-linear chain hydrocarbon group, an unsaturated-branched chain hydrocarbon group, an unsaturated-cyclic hydrocarbon group, an aromatic group, or a derivative group thereof. In the formula (1), n is preferably 1.

Examples of the saturated-linear chain hydrocarbon group include a methyl group, an ethyl group, a n-propyl group, and a n-butyl group, but are not particularly limited thereto. Examples of the saturated-branched chain hydrocarbon group include an i-propyl group and a t-butyl group, but are not particularly limited thereto. Examples of the saturated-cyclic hydrocarbon group include a cyclopentyl group and a cyclohexyl group, but are not particularly limited thereto. Examples of the unsaturated linear chain hydrocarbon group include a vinyl group and an allyl group, but are not particularly limited thereto. Examples of the unsaturated-branched chain hydrocarbon group include an i-propenyl group and a 3-butenyl group, but are not particularly limited thereto. Examples of the unsaturated cyclic hydrocarbon group include a cyclopentenyl group and a cyclohexenyl group, but are not particularly limited thereto. Examples of the aromatic group include a phenyl group and a naphthyl group, but are not particularly limited thereto.

Examples of the derivative group in R include a functional group in a state in which at least one selected from functional groups such as a carboxy group, a carboxylate group ($-COO^-$), a hydroxy group, an amino group, and an ammonium group is added to or substituted with a main chain or a side chain of each of the above various hydrocarbon groups, but are not particularly limited thereto. The number of carbon atoms constituting the main chain of R is not particularly limited, but is preferably 20 or less, and more preferably 10 or less. By setting the number of carbon atoms constituting the main chain of R within the above range, a molecular weight of the phosphorus oxoacid group can be set within an appropriate range, permeation into a fiber raw material can be facilitated, and a yield of the fine fibrous cellulose can be increased. Note that, when a plurality of Rs are present in the formula (1) or when a plurality of types of substituents represented by the formula (1) are introduced into the fine fibrous cellulose, the plurality of Rs may be the same or different.

$\beta^{b+}$ is a monovalent or higher valent cation formed of an organic substance or an inorganic substance. Examples of the monovalent or higher valent cation formed of an organic substance include an organic onium ion. Examples of the organic onium ion include an organic ammonium ion and an organic onium ion. Examples of the organic ammonium ion include an aliphatic ammonium ion and an aromatic ammonium ion, and examples of the organic onium ion include an aliphatic phosphonium ion and an aromatic phosphonium ion. Examples of the monovalent or higher valent cation formed of an inorganic substance include an ion of an alkali metal such as sodium, potassium, or lithium, an ion of a divalent metal such as calcium or magnesium, a hydrogen ion, and an ammonium ion. Note that, when a plurality of $\beta^{b+}$s are present in the formula (1) or when a plurality of types of substituents represented by the formula (1) are introduced into the fine fibrous cellulose, the plurality of $\beta^{b+}$s may be the same or different. As the monovalent or higher valent cation formed of an organic substance or an inorganic substance, an ion of sodium or potassium which is less likely to turn yellow when the fiber raw material containing $\beta^{b+}$ is heated and which is industrially easily used is preferable, but the monovalent or higher valent cation is not particularly limited.

More specific examples of the phosphorus oxoacid group or the substituent derived from the phosphorus oxoacid group include a phosphoric acid group ($-PO_3H_2$), a salt of a phosphoric acid group, a phosphorous acid group (phosphonic acid group) ($-PO_2H_2$), and a salt of a phosphorous acid group (phosphonic acid group). In addition, the phosphorus oxoacid group or the substituent derived from the phosphorus oxoacid group may be a group in which a phosphoric acid group is condensed (for example, a pyrophosphoric acid group), a group in which a phosphonic acid is condensed (for example, a polyphosphonic acid group), a phosphate ester group (for example, a monomethyl phosphate group or a polyoxyethylene alkyl phosphate group), and an alkyl phosphonate group (for example, a methyl phosphonate group).

The sulfur oxoacid group (the sulfur oxoacid group or the substituent derived from the sulfur oxoacid group) is, for example, a substituent represented by the following formula (2). A plurality of types of substituents represented by the following formula (2) may be introduced into the fine fibrous cellulose. In this case, a plurality of substituents represented by the following formula (2) to be introduced may be the same or different.

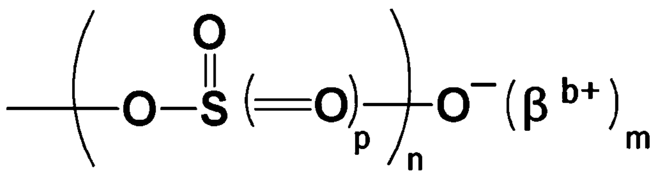

(2)

In the formula (2), b and n are natural numbers, p is 0 or 1, and m is any number (provided that $1 = b \times m$). When n is 2 or more, a plurality of ps may be the same number or different numbers. In the formula (2), $\beta^{b+}$ is a monovalent or higher valent cation formed of an organic substance or an inorganic substance. Examples of the monovalent or higher valent

cation formed of an organic substance include an organic onium ion. Examples of the organic onium ion include an organic ammonium ion and an organic onium ion. Examples of the organic ammonium ion include an aliphatic ammonium ion and an aromatic ammonium ion, and examples of the organic onium ion include an aliphatic phosphonium ion and an aromatic phosphonium ion. Examples of the monovalent or higher valent cation formed of an inorganic substance include an ion of an alkali metal such as sodium, potassium, or lithium, an ion of a divalent metal such as calcium or magnesium, a hydrogen ion, and an ammonium ion. When a plurality of types of substituents represented by the formula (2) are introduced into the fine fibrous cellulose, a plurality of $\beta^{b+}$s may be the same or different. As the monovalent or higher valent cation formed of an organic substance or an inorganic substance, an ion of sodium or potassium which is less likely to turn yellow when the fiber raw material containing $\beta^{b+}$ is heated and which is industrially easily used is preferable, but the monovalent or higher valent cation is not particularly limited.

The amount of ionic substituents introduced into the fine fibrous cellulose is, for example, preferably 0.10 mmol/g or more and 5.20 mmol/g or less, more preferably 0.20 mmol/g or more, still more preferably 0.40 mmol/g or more, and further still more preferably 0.60 mmol/g or more, and is more preferably 3.65 mmol/g or less, still more preferably 3.00 mmol/g or less, further still more preferably 2.50 mmol/g or less, yet more preferably 2.00 mmol/g or less, still even more preferably 1.50 mmol/g or less, and still yet more preferably 1.00 mmol/g or less per 1 g (mass) of the fine fibrous cellulose. Here, the denominator in the unit mmol/g indicates the mass of the fine fibrous cellulose when the counter ion of the ionic substituent is a hydrogen ion ($H^+$). By setting the amount of ionic substituents introduced within the above range, the fiber raw material can be easily refined, and the stability of the fine fibrous cellulose can be enhanced.

The amount of ionic substituents introduced into the fine fibrous cellulose can be measured, for example, by a neutralization titration method after the cellulose fiber is subjected to a refinement treatment. In measurement by a neutralization titration method, a change in pH is determined while an alkali such as a sodium hydroxide aqueous solution is added to an obtained slurry containing the fine fibrous cellulose, whereby the amount of introduction is measured.

Fig. 1 is a graph illustrating a relationship between the amount of NaOH added dropwise to a slurry containing a fine fibrous cellulose having a phosphorus oxoacid group and pH. The amount of phosphorus oxoacid groups introduced into the fine fibrous cellulose can be measured, for example, as follows.

First, ion-exchanged water is added to target cellulose fibers to prepare a slurry having a solid content concentration of 0.2% by mass. This slurry is treated four times with a wet atomization device (STAR BURST manufactured by Sugino Machine Limited) at a pressure of 200 MPa to obtain a fine fibrous cellulose dispersion (slurry) containing a fine fibrous cellulose. Then, the fine fibrous cellulose dispersion is treated with a strongly acidic ion exchange resin.

Next, a change in pH is observed while a sodium hydroxide aqueous solution is added, and a titration curve as indicated in an upper part of Fig. 1 is obtained. In the titration curve indicated in the upper part of Fig. 1, a measured pH is plotted with respect to the amount of the alkali added, and in the titration curve indicated in a lower part of Fig. 1, an increment (differential value) (1/mmol) of a pH with respect to the amount of the alkali added is plotted. In this neutralization titration, two points at which the increment (differential value of a pH with respect to the amount of the alkali added dropwise) is maximum are confirmed in the curve obtained by plotting a measured pH with respect to the amount of the alkali added. Out of these points, a maximum point of the increment obtained first after addition of the alkali is referred to as a first end point, and a maximum point of the increment obtained next is referred to as a second end point. The alkali amount required from start of titration to the first end point is equal to a first dissociated acid amount of the fine fibrous cellulose contained in the slurry used for titration, the alkali amount required from the first end point to the second end point is equal to a second dissociated acid amount of the fine fibrous cellulose contained in the slurry used for titration, and the alkali amount required from the start of titration to the second end point is equal to a total dissociated acid amount of the fine fibrous cellulose contained in the slurry used for titration. A value obtained by dividing the alkali amount required from the start of titration to the first end point by the solid content (g) in the slurry to be titrated is the amount of phosphorus oxoacid groups introduced (mmol/g). Note that the simple term "the amount of phosphorus oxoacid groups introduced (or the amount of phosphorus oxoacid groups)" refers to the first dissociated acid amount.

Note that, in Fig. 1, a region ranging from the start of titration to the first end point is referred to as a first region, and a region ranging from the first end point to the second end point is referred to as a second region. For example, when the phosphorus oxoacid group is a phosphoric acid group and the phosphorus oxoacid group causes condensation, the amount of weakly acidic groups in the phosphorus oxoacid group (also referred to as the "second dissociated acid amount" in the present description) is apparently reduced, and the alkali amount required for the second region is decreased as compared with the alkali amount required for the first region. Meanwhile, the amount of strongly acidic groups in the phosphorus oxoacid group (also referred to as the "first dissociated acid amount" in the present description) coincides with the amount of phosphorus atoms regardless of presence or absence of condensation. When the phosphorus oxoacid group is a phosphorous acid group, since a weakly acidic group is not present in the phosphorus oxoacid group, the alkali amount required for the second region may be decreased, or the alkali amount required for the second region may be zero. In this case, in the titration curve, there is only one point at which the increment of a pH is maximum.

Note that the denominator of the above-described amount of phosphorus oxoacid groups introduced (mmol/g)

indicates the mass of an acid type fine fibrous cellulose. Therefore, the amount of phosphorus oxoacid groups introduced (mmol/g) indicates the amount of phosphorus oxoacid groups of the acid type fine fibrous cellulose (hereinafter, referred to as "amount of phosphorus oxoacid groups (acid type)"). On the other hand, when the counter ion of the phosphorus oxoacid group is replaced with any cation C so as to achieve charge equivalent, the denominator is converted into the mass of a fine fibrous cellulose in which the cation C is the counter ion, whereby the amount of phosphorus oxoacid groups of the fine fibrous cellulose in which the cation C is the counter ion (hereinafter, referred to as "amount of phosphorus oxoacid groups (C type)") can be determined. That is, the amount of phosphorus oxoacid groups (C type) is calculated by the following calculation formula.

Amount of phosphorus oxoacid groups (C type) = amount of phosphorus oxoacid groups (acid type)/{1 + (W - 1) × P/1000}

P [mmol/g]: Total amount of anions derived from phosphorus oxoacid groups of fibrous cellulose (total dissociated acid amount of phosphorus oxoacid groups)
W: Formula amount per valence of cation C (for example, Na is 23, and Al is 9.)

Fig. 2 is a graph illustrating a relationship between the amount of NaOH added dropwise to a fine fibrous cellulose dispersion having a carboxy group as an ionic substituent and pH. The amount of carboxy groups introduced into the fine fibrous cellulose can be measured, for example, as follows.

First, ion-exchanged water is added to target cellulose fibers to prepare a slurry having a solid content concentration of 0.2% by mass. This slurry is treated four times with a wet atomization device (STAR BURST manufactured by Sugino Machine Limited) at a pressure of 200 MPa to obtain a fine fibrous cellulose dispersion (slurry) containing a fine fibrous cellulose. Then, the fine fibrous cellulose dispersion is treated with a strongly acidic ion exchange resin.

Next, a change in pH is observed while a sodium hydroxide aqueous solution is added, and a titration curve as indicated in an upper part of Fig. 2 is obtained. In the titration curve indicated in the upper part of Fig. 2, a measured pH is plotted with respect to the amount of the alkali added, and in the titration curve indicated in a lower part of Fig. 2, an increment (differential value) (1/mmol) of a pH with respect to the amount of the alkali added is plotted. In this neutralization titration, one point at which the increment (differential value of a pH with respect to the amount of the alkali added dropwise) is maximum is confirmed in the curve obtained by plotting a measured pH with respect to the amount of the alkali added, and this maximum point is referred to as a first end point. Here, a region ranging from the start of titration to the first end point in Fig. 2 is referred to as a first region. The alkali amount required for the first region is equal to the amount of carboxy groups in the dispersion used for titration. Then, the alkali amount (mmol) required for the first region of the titration curve is divided by the solid content (g) in the dispersion containing the fine fibrous cellulose to be titrated, thereby calculating the amount of carboxy groups introduced (mmol/g).

Note that the denominator of the above-described amount of carboxy groups introduced (mmol/g) is the mass of an acid type fine fibrous cellulose. Therefore, the amount of carboxy groups introduced (mmol/g) indicates the amount of carboxy groups of the acid type fine fibrous cellulose (hereinafter, referred to as "amount of carboxy groups (acid type)"). On the other hand, when the counter ion of the carboxy group is replaced with any cation C so as to achieve charge equivalent, the denominator is converted into the mass of a fine fibrous cellulose in which the cation C is the counter ion, whereby the amount of carboxy groups of the fine fibrous cellulose in which the cation C is the counter ion (hereinafter, referred to as "amount of carboxy groups (C type)") can be determined. That is, the amount of carboxy groups (C type) is calculated by the following calculation formula.

Amount of carboxy groups (C type) = amount of carboxy groups (acid type)/{1 + (W - 1) × (amount of carboxy groups (acid type))/1000}

W: Formula amount per valence of cation C (for example, Na is 23, and Al is 9.)

In the measurement of the amount of ionic substituents by the titration method, when the amount of a single droplet of a sodium hydroxide aqueous solution added dropwise is too large, or when a titration interval is too short, the amount of ionic substituents may be measured to be lower than an actual value, and thus, a precise value cannot be obtained in some cases. As an appropriate amount added dropwise and an appropriate titration interval, for example, titration is desirably performed by dropwise adding 10 to 50 μL of a 0.1 N sodium hydroxide aqueous solution every 5 to 30 seconds. In addition, in order to eliminate an influence of carbon dioxide dissolved in the fine fibrous cellulose dispersion, for example, it is desirable to perform measurement while blowing an inert gas such as nitrogen gas into the slurry from 15 minutes before the start of titration to the end of titration.

In addition, the amount of sulfate groups or sulfone groups introduced into the fine fibrous cellulose is determined by wet-ashing the obtained fine fibrous cellulose with perchloric acid and concentrated nitric acid, then diluting the fine fibrous cellulose at an appropriate factor, and measuring the amount of sulfur by ICP emission spectrometry.

A value obtained by dividing the amount of sulfur by the absolute dry mass of the fine fibrous cellulose supplied to a test is taken as the amount of sulfur oxoacid groups or sulfonic acid groups (unit: mmol/g).

In order to obtain the above-described fine fibrous cellulose having an ionic substituent introduced thereinto, an ionic substituent introduction step of introducing an ionic substituent into a cellulose-containing fiber raw material, a washing step, an alkali treatment step (neutralization step), and a defibration treatment step are preferably included in this order, and an acid treatment step may be included instead of or in addition to the washing step. Examples of the ionic substituent introduction step include a phosphorus oxoacid group introduction step, a carboxy group introduction step, a sulfur oxoacid group introduction step, a xanthate group introduction step, a phosphonate group or phosphine group introduction step, a sulfonic acid group introduction step, and a cation group introduction step. Each step will be described below.

<Fiber raw material>

The fiber raw material is a cellulose-containing fiber raw material, and examples thereof include, but are not particularly limited to, wood pulp, non-wood pulp, and deinked pulp. The wood pulp is not particularly limited, but examples thereof include: chemical pulps such as hardwood kraft pulp (LBKP), softwood kraft pulp (NBKP), sulfite pulp (SP), dissolving pulp (DP), soda pulp (AP), unbleached kraft pulp (UKP), and oxygen-bleached kraft pulp (OKP); semi-chemical pulps such as semi-chemical pulp (SCP) and chemigroundwood pulp (CGP); and mechanical pulps such as ground wood pulp (GP) and thermomechanical pulp (TMP and BCTMP). The non-wood pulp is not particularly limited, but examples thereof include: cotton-based pulps such as cotton linter and cotton lint; and non-wood based pulps such as hemp, wheat straw, bamboo, and bagasse. The deinked pulp is not particularly limited, but examples thereof include a deinked pulp of which the raw material is waste paper. As the pulp raw material of the present embodiment, one of the above pulp raw materials may be used singly, or two or more thereof may be used in combination.

Among the above pulps, for example, wood pulp and deinked pulp are preferable from the viewpoint of availability. Among the wood pulps, for example, chemical pulp is more preferable, and kraft pulp and sulfite pulp are further preferable, from the viewpoint that a cellulose ratio is high, and a yield of fine fibrous cellulose at the time of defibration treatment is high, and from the viewpoint that fine fibrous cellulose having long fibers is obtained, in which decomposition of cellulose in pulp is low and the axial ratio is high. When fine fibrous cellulose of long fibers having a large axial ratio is used, the viscosity tends to increase.

<Phosphorus oxoacid group introduction step>

When a cellulose fiber having an ionic substituent is obtained, it is preferable to provide an ionic substituent introduction step before the refinement treatment step. Examples of the ionic substituent introduction step include a phosphorus oxoacid group introduction step. The phosphorus oxoacid group introduction step is a step of allowing at least one compound (hereinafter, also referred to as "compound A") selected from compounds capable of introducing a phosphorus oxoacid group to act on a cellulose-containing fiber raw material by a reaction between the compound A and a hydroxy group of the cellulose-containing fiber raw material. By this step, a cellulose fiber having a phosphorus oxoacid group is obtained.

In the phosphorus oxoacid group introduction step according to the present embodiment, the reaction between the cellulose-containing fiber raw material and the compound A may be performed in the presence of at least one selected from urea and derivatives thereof (hereinafter, also referred to as "compound B"). On the other hand, the reaction between the cellulose-containing fiber raw material and the compound A may be performed in the absence of the compound B.

An example of a method for allowing the compound A to act on the fiber raw material in the coexistence with the compound B is a method for mixing the compound A and the compound B with the fiber raw material in a dry state, a wet state, or a slurry state. Among these, it is preferable to use the fiber raw material in a dry state or a wet state, and it is particularly preferable to use the fiber raw material in a dry state because uniformity of the reaction is high. The form of the fiber raw material is not particularly limited, but is preferably, for example, a cotton-like form or a thin sheet-like form. Examples of the method include a method for adding the compound A and the compound B to the fiber raw material while each of the compound A and the compound B is in a powder form, is in a solution form in which the compound A and the compound B are dissolved in a solvent, or is in a melted state by being heated to a melting point or higher. Among these, it is preferable to add the compound A and the compound B in a solution form in which the compound A and the compound B are dissolved in a solvent, particularly in an aqueous solution state because uniformity of the reaction is high. In addition, the compound A and the compound B may be simultaneously added to the fiber raw material, may be separately added, or may be added as a mixture. A method for adding the compound A and the compound B is not particularly limited, but when

each of the compound A and the compound B is in a form of a solution, the fiber raw material may be immersed in the solution to absorb liquid, and then taken out, or the solution may be added dropwise to the fiber raw material. In addition, required amounts of the compound A and the compound B may be added to the fiber raw material, or excess amounts of the compound A and the compound B may be added to the fiber raw material, and then surplus amounts of the compound A and the compound B may be removed by compression or filtration.

The compound A used in the present embodiment only needs to be a compound having a phosphorus atom and capable of forming an ester bond with a cellulose, and examples thereof include phosphoric acid or a salt thereof, phosphorous acid or a salt thereof, dehydration-condensed phosphoric acid or a salt thereof, and phosphoric anhydride (diphosphorus pentoxide), but are not particularly limited thereto. As the phosphoric acid, phosphoric acids having various purities can be used, and for example, 100% phosphoric acid (orthophosphoric acid) or 85% phosphoric acid can be used. Examples of the phosphorous acid include 99% phosphorous acid (phosphonic acid). The dehydration-condensed phosphoric acid is obtained by condensing two or more molecules of phosphoric acid by a dehydration reaction, and examples thereof include pyrophosphoric acid and polyphosphoric acid. Examples of the phosphate, phosphite, and dehydration-condensed phosphate include a lithium salt, a sodium salt, a potassium salt, and an ammonium salt of phosphoric acid, phosphorous acid, or dehydration-condensed phosphoric acid, and these can have various degrees of neutralization. Among them, phosphoric acid, a sodium salt of phosphoric acid, a potassium salt of phosphoric acid, an ammonium salt of phosphoric acid, or phosphorous acid, a sodium salt of phosphorous acid, a potassium salt of phosphorous acid, and an ammonium salt of phosphorous acid are preferable, and phosphoric acid, sodium dihydrogen phosphate, disodium hydrogen phosphate, ammonium dihydrogen phosphate, or phosphorous acid, and sodium phosphite are more preferable from the viewpoint of high introduction efficiency of the phosphoric acid group, easiness of further improving defibration efficiency in the defibration step described later, lower cost, and easy industrial application.

The amount of the compound A added to the fiber raw material is not particularly limited, but for example, when the amount of the compound A added is converted into the amount of phosphorus atoms, the amount of phosphorus atoms added to the fiber raw material (absolute dry mass) is preferably 0.5% by mass or more and 100% by mass or less, more preferably 1% by mass or more and 50% by mass or less, and still more preferably 2% by mass or more and 30% by mass or less. By setting the amount of phosphorus atoms added to the fiber raw material within the above range, a yield of the fine fibrous cellulose can be further improved. On the other hand, by setting the amount of phosphorus atoms added to the fiber raw material to the above upper limit value or less, an effect of improving the yield and cost can be balanced.

The compound B used in the present embodiment is at least one selected from urea and derivatives thereof as described above. Examples of the compound B include urea, biuret, 1-phenylurea, 1-benzylurea, 1-methylurea, and 1-ethylurea. The compound B is preferably used as an aqueous solution from the viewpoint of improving uniformity of the reaction. In addition, it is preferable to use an aqueous solution in which both the compound A and the compound B are dissolved from the viewpoint of further improving the uniformity of the reaction.

The amount of the compound B added to the fiber raw material (absolute dry mass) is not particularly limited, but is, for example, preferably 1% by mass or more and 500% by mass or less, more preferably 10% by mass or more and 400% by mass or less, and still more preferably 100% by mass or more and 350% by mass or less.

In the reaction between the cellulose-containing fiber raw material and the compound A, for example, amides or amines may be included in the reaction system in addition to the compound B. Examples of the amides include formamide, dimethylformamide, acetamide, and dimethylacetamide. Examples of the amines include methylamine, ethylamine, trimethylamine, triethylamine, monoethanolamine, diethanolamine, triethanolamine, pyridine, ethylenediamine, and hexamethylenediamine. Among these, particularly triethylamine is known to act as a favorable reaction catalyst.

In the phosphorus oxoacid group introduction step, it is preferable to add or mix the compound A and the like to the fiber raw material, and then to subject the fiber raw material to a heat treatment. As a heat treatment temperature, it is preferable to select a temperature at which a phosphorus oxoacid group can be efficiently introduced while suppressing thermal decomposition and a hydrolysis reaction of a fiber. The heat treatment temperature is, for example, preferably 50°C or higher and 300°C or lower, more preferably 100°C or higher and 250°C or lower, and still more preferably 130°C or higher and 200°C or lower. In the heat treatment, various devices having heat media can be used, and for example, a stirring and drying device, a rotary drying device, a disk drying device, a roll type heating device, a plate type heating device, a fluidized bed drying device, a band type drying device, a filtration drying device, a vibration fluidizing drying device, an airflow drying device, a reduced pressure drying device, an infrared heating device, a far infrared heating device, a microwave heating device, or a high frequency drying device can be used.

In the heat treatment according to the present embodiment, for example, a method for adding the compound A to a thin sheet-shaped fiber raw material by a method such as impregnation and then heating the mixture or a method for heating the fiber raw material and the compound A while kneading or stirring the fiber raw material and the compound A with a kneader or the like can be adopted. This makes it possible to suppress concentration unevenness of the compound A in the fiber raw material and to more uniformly introduce a phosphorus oxoacid group to a surface of a cellulose fiber contained in the fiber raw material. This is considered to be because it is possible to suppress attraction of the dissolved compound A to water molecules by surface tension and movement of the compound A to the surface of the fiber raw

material in a similar manner (that is, occurrence of concentration unevenness of the compound A) when the water molecules move to the surface of the fiber raw material along with drying.

In addition, the heating device used for the heat treatment is preferably a device capable of constantly discharging moisture retained by a slurry and moisture generated in association with a dehydration condensation (phosphoric acid esterification) reaction between the compound A and a hydroxy group or the like contained in a cellulose or the like in the fiber raw material to the outside of the device system. Examples of such a heating device include an air blowing type oven. By constantly discharging moisture in the device system, it is possible to suppress a hydrolysis reaction of a phosphoric acid ester bond, which is a reverse reaction of phosphoric acid esterification, and it is also possible to suppress acid hydrolysis of a sugar chain in the fiber. Therefore, it is possible to obtain a fine fibrous cellulose having a high axial ratio.

The time for the heat treatment is, for example, preferably 1 second or more and 300 minutes or less, more preferably 1 second or more and 1,000 seconds or less, still more preferably 10 seconds or more and 800 seconds or less after moisture is substantially removed from the fiber raw material. In the present embodiment, by setting the heating temperature and the heating time within appropriate ranges, the amount of phosphorus oxoacid groups introduced can be set within a preferable range.

The phosphorus oxoacid group introduction step only needs to be performed at least once, but can be repeatedly performed twice or more. By performing the phosphorus oxoacid group introduction step twice or more, a large number of phosphorus oxoacid groups can be introduced into the fiber raw material.

The amount of phosphorus oxoacid groups introduced into the fiber raw material is, for example, preferably 0.10 mmol/g or more and 5.20 mmol/g or less, more preferably 0.20 mmol/g or more, still more preferably 0.50 mmol/g or more, and further still more preferably 1.00 mmol/g or more, and more preferably 3.65 mmol/g or less and still more preferably 3.00 mmol/g or less per 1 g (mass) of the cellulose fiber. By setting the amount of phosphorus oxoacid groups introduced within the above range, the cellulose fiber can be easily refined in the refinement treatment step, and the stability of the fine fibrous cellulose can be enhanced.

<Carboxy group introduction step>

The ionic substituent introduction step may include a carboxy group introduction step. The carboxy group introduction step is performed by subjecting a cellulose-containing fiber raw material to an oxidation treatment such as ozone oxidation, oxidation by a Fenton process, or a TEMPO oxidation treatment, or a treatment with a compound having a carboxylic acid-derived group or derivatives thereof or an acid anhydride of a compound having a carboxylic acid-derived group or derivatives thereof.

The compound having a carboxylic acid-derived group is not particularly limited, and examples thereof include dicarboxylic acid compounds such as maleic acid, succinic acid, phthalic acid, fumaric acid, glutaric acid, adipic acid, and itaconic acid, and tricarboxylic acid compounds such as citric acid and aconitic acid. The derivative of the compound having a carboxylic acid-derived group is not particularly limited, and examples thereof include an imidized form of an acid anhydride of a compound having a carboxy group and a derivative of an acid anhydride of a compound having a carboxy group. The imidized form of an acid anhydride of a compound having a carboxy group is not particularly limited, and examples thereof include imidized forms of dicarboxylic acid compounds, such as maleimide, succinimide, and phthalimide.

The acid anhydride of a compound having a carboxylic acid-derived group is not particularly limited, and examples thereof include acid anhydrides of dicarboxylic acid compounds, such as maleic anhydride, succinic anhydride, phthalic anhydride, glutaric anhydride, adipic anhydride, and itaconic anhydride. In addition, the derivative of an acid anhydride of a compound having a carboxylic acid-derived group is not particularly limited, and examples thereof include those in which at least some hydrogen atoms of an acid anhydride of a compound having a carboxy group are substituted with a substituent such as an alkyl group or a phenyl group, such as dimethylmaleic anhydride, diethylmaleic anhydride, and diphenylmaleic anhydride.

When the TEMPO oxidation treatment is performed in the carboxy group introduction step, for example, the treatment is preferably performed under the condition of a pH of 6 or more and 8 or less. Such a treatment is also referred to as a neutral TEMPO oxidation treatment. The neutral TEMPO oxidation treatment can be performed, for example, by adding pulp as a fiber raw material, nitroxy radicals such as TEMPO (2,2,6,6-tetramethylpiperidine-1-oxyl) as a catalyst, and sodium hypochlorite as a sacrificial reagent to a sodium phosphate buffer solution (pH = 6.8). Furthermore, sodium chlorite is allowed to coexist in the reaction system, whereby aldehyde generated in the process of oxidation can be efficiently oxidized to a carboxy group.

The TEMPO oxidation treatment may also be performed under the condition of a pH of 10 or more and 11 or less. Such a treatment is also referred to as an alkali TEMPO oxidation treatment. The alkali TEMPO oxidation treatment can be performed, for example, by adding nitroxy radicals such as TEMPO as a catalyst, sodium bromide as a cocatalyst, and sodium hypochlorite as an oxidizing agent to pulp as a fiber raw material.

The amount of carboxy groups introduced into the cellulose fiber varies depending on the type of the substituent, but for example, when the carboxy group is introduced by TEMPO oxidation, the amount of carboxy groups introduced is preferably 0.10 mmol/g or more and 3.65 mmol/g or less, more preferably 0.20 mmol/g or more, still more preferably 0.40 mmol/g or more, and further still more preferably 0.60 mmol/g or more, and is more preferably 3.00 mmol/g or less, still more preferably 2.50 mmol/g or less, further still more preferably 2.00 mmol/g or less, yet more preferably 1.50 mmol/g or less, and still even more preferably 1.00 mmol/g or less per 1 g (mass) of the cellulose fiber. In addition, when the substituent is a carboxymethyl group, the amount of carboxy groups introduced may be 5.8 mmol/g or less per 1 g (mass) of the cellulose fiber. By setting the amount of carboxy groups introduced within the above range, it is possible to facilitate the refinement of the cellulose fiber in the refinement treatment step and to enhance the stability of the fine fibrous cellulose.

<Sulfonic acid group introduction step>

The ionic substituent introduction step may include a sulfonic acid group introduction step. In the sulfonic acid group introduction step, a hydroxy group of the cellulose-containing fiber raw material reacts with a sulfur oxoacid to obtain a cellulose fiber having a sulfonic acid group (sulfonic acid group-introduced fiber).

In the sulfonic acid group introduction step, at least one compound (hereinafter, also referred to as "compound C") selected from compounds capable of introducing a sulfonic acid group by a reaction between the compound C and a hydroxy group of the cellulose-containing fiber raw material is used instead of the compound A in <Phosphorus oxoacid group introduction step> described above. The compound C may be any compound having sulfur atoms and capable of forming an ester bond with cellulose, and examples thereof include, but are not particularly limited to, sulfuric acid or a salt thereof, sulfurous acid or a salt thereof, and amidosulfuric acid. As the sulfuric acid, sulfuric acids having various purities can be used, and for example, 96% sulfuric acid (concentrated sulfuric acid) can be used. Examples of the sulfurous acid include 5% sulfurous acid solution. Examples of the sulfate or sulfite include a lithium salt, a sodium salt, a potassium salt, and an ammonium salt of a sulfate or sulfite, and these can have various degrees of neutralization. As the amidosulfuric acid, sulfamic acid or the like can be used. In the sulfonic acid group introduction step, the compound B in <Phosphorus oxoacid group introduction step> described above is preferably used in the same manner.

In the sulfonic acid group introduction step, it is preferable that an aqueous solution containing a sulfur oxoacid and urea and/or derivatives of urea is mixed with the cellulose raw material, and then the cellulose raw material is subjected to a heat treatment. As a heat treatment temperature, it is preferable to select a temperature at which a sulfonic acid group can be efficiently introduced while suppressing thermal decomposition and a hydrolysis reaction of a fiber. The heat treatment temperature is preferably 100°C or higher and 300°C or lower, more preferably 120°C or higher and still more preferably 150°C or higher, and more preferably 250°C or lower and still more preferably 200°C or lower.

In the heat treatment step, heating is preferably performed until moisture is substantially removed. Therefore, the heat treatment time varies depending on the amount of water contained in the cellulose raw material and the amount of the aqueous solution containing a sulfur oxoacid and urea and/or derivatives of urea added, but is preferably, for example, 10 seconds or more and 10,000 seconds or less. In the heat treatment, various devices having heat media can be used, and for example, a hot-air drying device, a stirring and drying device, a rotary drying device, a disk drying device, a roll type heating device, a plate type heating device, a fluidized bed drying device, a band type drying device, a filtration drying device, a vibration fluidizing drying device, an airflow drying device, a reduced pressure drying device, an infrared heating device, a far infrared heating device, a microwave heating device, or a high frequency drying device can be used.

The amount of sulfonic acid groups introduced into the cellulose raw material is preferably 0.05 mmol/g or more and 5.00 mmol/g or less, more preferably 0.10 mmol/g or more, still more preferably 0.20 mmol/g or more, further still more preferably 0.40 mmol/g or more, yet more preferably 0.50 mmol/g or more, and more preferably 3.00 mmol/g or less. By setting the amount of sulfonic acid groups introduced within the above range, it is possible to facilitate the refinement of the cellulose fiber in the refinement treatment step and to enhance the stability of the fine fibrous cellulose.

<Oxidation step with chlorine-based oxidizing agent (second carboxy group introduction step)>

The ionic substituent introduction step may include an oxidation step with a chlorine-based oxidizing agent. In the oxidation step with a chlorine-based oxidizing agent, a carboxy group is introduced into the fiber raw material by adding the chlorine-based oxidizing agent to the fiber raw material having a hydroxy group in a wet state or a dry state to perform a reaction.

Examples of the chlorine-based oxidizing agent include hypochlorous acid, hypochlorite, chlorous acid, chlorite, chloric acid, chlorate, perchloric acid, perchlorate, and chlorine dioxide. The chlorine-based oxidizing agent is preferably sodium hypochlorite, sodium chlorite, or chlorine dioxide from the viewpoint of introduction efficiency of the substituent, and further, defibration efficiency, cost, and ease of handling. When the chlorine-based oxidizing agent is added, the chlorine-based oxidizing agent may be added to the fiber raw material as it is as a reagent (in a solid form or liquid form), or may be added by being dissolved in an appropriate solvent.

The concentration of the chlorine-based oxidizing agent in the solution in the oxidation step with a chlorine-based oxidizing agent is, for example, preferably 1% by mass or more and 1,000% by mass or less, more preferably 5% by mass or more and 500% by mass or less, and still more preferably 10% by mass or more and 100% by mass or less in terms of the effective chlorine concentration. The amount of the chlorine-based oxidizing agent added to 100 parts by mass of the fiber raw material is preferably 1 part by mass or more and 100,000 parts by mass or less, more preferably 10 parts by mass or more and 10,000 parts by mass or less, and still more preferably 100 parts by mass or more and 5,000 parts by mass or less.

The reaction time with the chlorine-based oxidizing agent in the oxidation step with a chlorine-based oxidizing agent may vary depending on the reaction temperature, and is, for example, preferably 1 minute or more and 1,000 minutes or less, more preferably 10 minutes or more and 500 minutes or less, and still more preferably 20 minutes or more and 400 minutes or less. The pH during the reaction is preferably 5 or more and 15 or less, more preferably 7 or more and 14 or less, and still more preferably 9 or more and 13 or less. In addition, at the start of the reaction, it is preferable to keep the pH during the reaction constant (for example, pH 11) while appropriately adding hydrochloric acid or sodium hydroxide. After the reaction, excess reaction reagents, by-products, and the like may be washed with water, and removed by filtration or the like.

<Xanthate group introduction step>

The production process of a fine fibrous cellulose may include a xanthate group introduction step as the ionic substituent introduction step. In the xanthate group introduction step, a cellulose fiber having a xanthate group (xanthate group-introduced fiber) can be obtained by substituting a hydroxy group of the cellulose-containing fiber raw material with a xanthate group represented by the following formula (3).

$$-OCSS^{-}M^{+}...... \qquad (3)$$

Here, $M^+$ is at least one selected from a hydrogen ion, a monovalent metal ion, an ammonium ion, and an aliphatic or aromatic ammonium ion.

In the xanthate group introduction step, first, an alkali treatment of treating the cellulose-containing fiber raw material with an alkaline solution is performed to obtain alkali cellulose. Examples of the alkaline solution include an alkali metal hydroxide aqueous solution and an alkaline earth metal hydroxide aqueous solution. Among them, the alkaline solution is preferably an aqueous solution of alkali metal hydroxide such as sodium hydroxide or potassium hydroxide, and more preferably a sodium hydroxide aqueous solution. When the alkaline solution is an alkali metal hydroxide aqueous solution, the alkali metal hydroxide concentration in the alkali metal hydroxide aqueous solution is preferably 4% by mass or more and 9% by mass or less, and more preferably 5% by mass or more. By setting the alkali metal hydroxide concentration to the above lower limit value or more, mercerization of cellulose can be sufficiently advanced, the amount of by-products generated at the time of subsequent xanthation can be reduced, and as a result, the yield of the xanthate group-introduced fiber can be increased. Thus, the defibration treatment described later can be more effectively performed. In addition, by setting the alkali metal hydroxide concentration to the above upper limit value or less, permeation of the alkali metal hydroxide aqueous solution into the crystalline region of cellulose can be suppressed while promoting mercerization. As a result, the cellulose type I crystal structure is easily maintained, and the yield of the fine fibrous cellulose can be further increased.

The time for the alkali treatment is preferably 30 minutes or more and 6 hours or less, and more preferably 1 hour or more and 5 hours or less. By setting the time for the alkali treatment within the above range, the final yield can be increased, and the productivity can be increased.

It is preferable that the alkali cellulose obtained by the alkali treatment is then subjected to solid-liquid separation to remove the aqueous solution as much as possible. This makes it possible to reduce the moisture content at the time of the subsequent xanthation treatment and to promote the reaction. As a method of solid-liquid separation, for example, general dehydration methods such as centrifugation or filtration can be used. The concentration of the alkali metal hydroxide contained in the alkali cellulose after the solid-liquid separation is preferably 3% by mass or more and 8% by mass or less with respect to the total mass of the alkali cellulose after the solid-liquid separation.

In the xanthation group introduction step, the xanthation treatment step is performed after the alkali treatment. In the xanthation treatment step, carbon disulfide ($CS_2$) is reacted with the alkali cellulose to convert ($-O^-Na^+$) groups into ($-OCSS^-Na^+$) groups, thereby obtaining a xanthate group-introduced fiber. In the above description, the metal ions introduced into the alkali cellulose are representatively described as $Na^+$, but the same reaction proceeds also in the case of using other alkali metal ions.

In the xanthation treatment, it is preferable to supply 10% by mass or more of carbon disulfide with respect to the absolute dry mass of cellulose in the alkali cellulose. In the xanthation treatment, the contact time between carbon disulfide and alkali cellulose is preferably 30 minutes or more, more preferably 1 hour or more. When carbon disulfide is brought into

contact with the alkali cellulose, xanthation rapidly proceeds, but it takes time for carbon disulfide to permeate into the alkali cellulose, and thus it is preferable to set the reaction time to the above range. On the other hand, the contact time between carbon disulfide and the alkali cellulose only needs to be 6 hours or less, whereby carbon disulfide sufficiently permeates into the mass of the alkali cellulose after dehydration, and reactive xanthation can be almost completed.

The reaction temperature in the xanthation treatment is preferably 46°C or lower. By setting the reaction temperature within the above range, decomposition of the alkali cellulose is easily suppressed. In addition, by setting the reaction temperature within the above range, the reaction is easily performed uniformly, so that the generation of by-products can be suppressed, and furthermore, the removal of the generated xanthate group can also be suppressed.

The amount of xanthate groups introduced in the xanthate group introduction step is preferably 0.60 mmol/g or more and 5.00 mmol/g or less, more preferably 0.70 mmol/g or more, still more preferably 0.80 mmol/g or more, further still more preferably 1.00 mmol/g or more, yet more preferably 1.20 mmol/g or more, and more preferably 3.00 mmol/g or less per 1 g (mass) of the fiber raw material. By setting the amount of xanthate groups introduced within the above range, the fiber raw material can be easily refined, and the stability of the fine fibrous cellulose can be enhanced.

<Phosphonate group or phosphine group introduction step (phosphoalkylation step)>

The ionic substituent introduction step may include a phosphonate group or phosphine group introduction step (phosphoalkylation step). In the phosphoalkylation step, a phosphonate group or a phosphine group is introduced into the fiber raw material by adding a compound having a reactive group and a phosphonate group or a phosphine group (compound $E_A$) as an essential component, an alkali compound, and the above compound B selected from urea and derivatives thereof as optional components to a fiber raw material having a hydroxy group in a wet state or a dry state to perform a reaction.

Examples of the reactive group include a halogenated alkyl group, a vinyl group, and an epoxy group (glycidyl group).

Examples of the compound $E_A$ include vinylphosphonic acid, phenylvinylphosphonic acid, and phenylvinylphosphinic acid. The compound $E_A$ is preferably vinylphosphonic acid from the viewpoint of introduction efficiency of the substituent, and further, defibration efficiency, cost, and ease of handling.

Furthermore, as an optional component, it is also preferable to use the compound B in <Phosphorus oxoacid group introduction step> described above in the same manner, and the amount of the compound B added is also preferably as described above.

When the compound $E_A$ is added, the compound $E_A$ may be added to the fiber raw material as it is as a reagent (in a solid form or liquid form), or may be added by being dissolved in an appropriate solvent. The fiber raw material is preferably converted into alkali cellulose in advance or simultaneously with the reaction. The method of converting the fiber raw material into alkali cellulose is as described above.

The temperature during the reaction is, for example, preferably 50°C or higher and 300°C or lower, more preferably 100°C or higher and 250°C or lower, and still more preferably 130°C or higher and 200°C or lower.

The amount of the compound $E_A$ added to 100 parts by mass of the fiber raw material is preferably 1 part by mass or more and 100,000 parts by mass or less, more preferably 2 parts by mass or more and 10,000 parts by mass or less, and still more preferably 5 parts by mass or more and 1,000 parts by mass or less.

The reaction time may vary depending on the reaction temperature, and is, for example, preferably 1 minute or more and 1,000 minutes or less, more preferably 10 minutes or more and 500 minutes or less, and still more preferably 20 minutes or more and 400 minutes or less. After the reaction, excess reaction reagents, by-products, and the like may be washed with water, and removed by filtration or the like.

<Sulfonic acid group introduction step (sulfoalkylation step) (second sulfonic acid group introduction step)>

The ionic substituent introduction step may include a sulfonic acid group introduction step (sulfoalkylation step). In the sulfoalkylation, a sulfonic acid group is introduced into the fiber raw material by adding a compound having a reactive group and a sulfonic acid group (compound $E_B$) as an essential component, an alkali compound, and the above compound B selected from urea and derivatives thereof as optional components to a fiber raw material having a hydroxy group in a wet state or a dry state to perform a reaction.

Examples of the reactive group include a halogenated alkyl group, a vinyl group, and an epoxy group (glycidyl group).

Examples of the compound $E_B$ include sodium 2-chloroethanesulfonate, sodium vinylsulfonate, sodium p-styrenesulfonate, and 2-acrylamide-2-methylpropanesulfonic acid. Among them, the compound $E_B$ is preferably sodium vinylsulfonate from the viewpoint of introduction efficiency of the substituent, and further, defibration efficiency, cost, and ease of handling.

Furthermore, as an optional component, it is also preferable to use the compound B in <Phosphorus oxoacid

group introduction step> described above in the same manner, and the amount of the compound B added is also preferably as described above.

When the compound $E_B$ is added, the compound $E_B$ may be added to the fiber raw material as it is as a reagent (in a solid form or liquid form), or may be added by being dissolved in an appropriate solvent. The fiber raw material is preferably converted into alkali cellulose in advance or simultaneously with the reaction. The method of converting the fiber raw material into alkali cellulose is as described above.

The temperature during the reaction is, for example, preferably 50°C or higher and 300°C or lower, more preferably 100°C or higher and 250°C or lower, and still more preferably 130°C or higher and 200°C or lower.

The amount of the compound $E_B$ added to 100 parts by mass of the fiber raw material is preferably 1 part by mass or more and 100,000 parts by mass or less, more preferably 2 parts by mass or more and 10,000 parts by mass or less, and still more preferably 5 parts by mass or more and 1,000 parts by mass or less.

The reaction time may vary depending on the reaction temperature, and is, for example, preferably 1 minute or more and 1,000 minutes or less, more preferably 10 minutes or more and 500 minutes or less, and still more preferably 15 minutes or more and 400 minutes or less. After the reaction, excess reaction reagents, by-products, and the like may be washed with water, and removed by filtration or the like.

<Carboxyalkylation step (third carboxy group introduction step)>

The ionic substituent introduction step may include a carboxyalkylation step. A carboxy group is introduced into the fiber raw material by adding a compound having a reactive group and a carboxy group (compound $E_C$) as an essential component, an alkali compound, and the above compound B selected from urea and derivatives thereof as optional components to a fiber raw material having a hydroxy group in a wet state or a dry state to perform a reaction.

Examples of the reactive group include a halogenated alkyl group, a vinyl group, and an epoxy group (glycidyl group).

The compound $E_C$ is preferably monochloroacetic acid, sodium monochloroacetate, 2-chloropropionic acid, 3-chloropropionic acid, sodium 2-chloropropionate, and sodium 3-chloropropionate from the viewpoint of introduction efficiency of the substituent, and further, defibration efficiency, cost, and ease of handling.

Furthermore, as an optional component, it is also preferable to use the compound B in <Phosphorus oxoacid group introduction step> described above in the same manner, and the amount of the compound B added is also preferably as described above.

When the compound $E_C$ is added, the compound $E_C$ may be added to the fiber raw material as it is as a reagent (in a solid form or liquid form), or may be added by being dissolved in an appropriate solvent. The fiber raw material is preferably converted into alkali cellulose in advance or simultaneously with the reaction. The method of converting the fiber raw material into alkali cellulose is as described above.

The temperature during the reaction is, for example, preferably 50°C or higher and 300°C or lower, more preferably 100°C or higher and 250°C or lower, and still more preferably 130°C or higher and 200°C or lower.

The amount of the compound $E_C$ added to 100 parts by mass of the fiber raw material is preferably 1 part by mass or more and 100,000 parts by mass or less, more preferably 2 parts by mass or more and 10,000 parts by mass or less, and still more preferably 5 parts by mass or more and 1,000 parts by mass or less.

The reaction time may vary depending on the reaction temperature, and is, for example, preferably 1 minute or more and 1,000 minutes or less, more preferably 3 minutes or more and 500 minutes or less, and still more preferably 5 minutes or more and 400 minutes or less. After the reaction, excess reaction reagents, by-products, and the like may be washed with water, and removed by filtration or the like.

<Cationic group introduction step (cationization step)>

A cationic group is introduced into the fiber raw material by adding a compound having a reactive group and a cationic group (compound $E_D$) as an essential component, an alkali compound, and the above compound B selected from urea and derivatives thereof as optional components to a fiber raw material having a hydroxy group in a wet state or a dry state to perform a reaction.

Examples of the reactive group include a halogenated alkyl group, a vinyl group, and an epoxy group (glycidyl group).

Examples of the cationic group include an ammonium group, a phosphonium group, and a sulfonium group. Among them, the cationic group is preferably an ammonium group.

The compound $E_D$ is preferably glycidyltrimethylammonium chloride, 3-chloro-2-hydroxypropyltrimethylammonium chloride, and the like from the viewpoint of introduction efficiency of the substituent, and further, defibration efficiency, cost, and ease of handling.

Furthermore, it is also preferable to use the compound B in <Phosphorus oxoacid group introduction step>

described above as an optional component. The amount of the compound B added is also preferably set as described above.

When the compound $E_D$ is added, the compound $E_D$ may be added to the fiber raw material as it is as a reagent (in a solid form or liquid form), or may be added by being dissolved in an appropriate solvent. The fiber raw material is preferably converted into alkali cellulose in advance or simultaneously with the reaction. The method of converting the fiber raw material into alkali cellulose is as described above.

The temperature during the reaction is, for example, preferably 50°C or higher and 300°C or lower, more preferably 100°C or higher and 250°C or lower, and still more preferably 130°C or higher and 200°C or lower.

The amount of the compound $E_D$ added to 100 parts by mass of the fiber raw material is preferably 1 part by mass or more and 100,000 parts by mass or less, more preferably 2 parts by mass or more and 10,000 parts by mass or less, and still more preferably 5 parts by mass or more and 1,000 parts by mass or less.

The reaction time may vary depending on the reaction temperature, and is, for example, preferably 1 minute or more and 1,000 minutes or less, more preferably 5 minutes or more and 500 minutes or less, and still more preferably 10 minutes or more and 400 minutes or less. After the reaction, excess reaction reagents, by-products, and the like may be washed with water, and removed by filtration or the like.

<Washing step>

In the step of obtaining a cellulose fiber having an ionic substituent, a washing step can be performed on the ionic substituent-introduced fiber as necessary. The washing step is performed by washing the ionic substituent-introduced fiber with, for example, water or an organic solvent. The washing step may be performed after steps described later, and the number of times of washing performed in each washing step is not particularly limited.

<Alkali treatment step>

In the step of obtaining a cellulose fiber having an ionic substituent, an alkali treatment step may be provided between the ionic substituent introduction step and the refinement treatment step. A method for the alkali treatment is not particularly limited, but examples thereof include a method for immersing an ionic substituent-introduced fiber in an alkaline solution.

An alkali compound contained in the alkaline solution is not particularly limited, and may be an inorganic alkali compound or an organic alkali compound. In the present embodiment, for example, sodium hydroxide or potassium hydroxide is preferably used as the alkali compound because of high versatility. A solvent contained in the alkaline solution may be either water or an organic solvent. Among these, the solvent contained in the alkaline solution is preferably water, a polar solvent containing a polar organic solvent exemplified by an alcohol, or the like, and more preferably an aqueous solvent containing at least water. The alkaline solution is preferably, for example, a sodium hydroxide aqueous solution or a potassium hydroxide aqueous solution because of high versatility.

The temperature of the alkaline solution in the alkali treatment step is not particularly limited, but is, for example, preferably 5°C or higher and 80°C or lower, and more preferably 10°C or higher and 60°C or lower. The immersion time of the ionic substituent-introduced fiber in the alkaline solution in the alkali treatment step is not particularly limited, but is, for example, preferably 5 minutes or more and 30 minutes or less, more preferably 10 minutes or more and 20 minutes or less. The amount of the alkaline solution used in the alkali treatment is not particularly limited, but is, for example, preferably 100% by mass or more and 100,000% by mass or less, and more preferably 1,000% by mass or more and 10,000% by mass or less with respect to the absolute dry mass of the ionic substituent-introduced fiber.

In order to reduce the amount of the alkaline solution used in the alkali treatment step, the ionic substituent-introduced fiber may be washed with water or an organic solvent after the ionic substituent introduction step and before the alkali treatment step. After the alkali treatment step and before the refinement treatment step, it is preferable to wash the ionic substituent-introduced fiber subjected to the alkali treatment with water or an organic solvent from the viewpoint of improving handleability.

<Acid treatment step>

In the step of obtaining a cellulose fiber having an ionic substituent, an acid treatment step may be provided between the ionic substituent introduction step and the refinement treatment step. For example, the ionic substituent introduction step, the acid treatment, the alkali treatment, and the refinement treatment may be performed in this order.

A method for the acid treatment is not particularly limited, but examples thereof include a method for immersing the fiber raw material in an acidic solution containing an acid. The concentration of the acidic solution to be used is not particularly limited, but is, for example, preferably 10% by mass or less, and more preferably 5% by mass or less. The pH of the acidic solution to be used is not particularly limited, but is, for example, preferably 0 or more and 4 or less, and more

preferably 1 or more and 3 or less. As the acid contained in the acidic solution, for example, an inorganic acid, a sulfonic acid, or a carboxylic acid can be used. Examples of the inorganic acid include sulfuric acid, nitric acid, hydrochloric acid, hydrobromic acid, hydroiodic acid, hypochlorous acid, chlorous acid, chloric acid, perchloric acid, phosphoric acid, and boric acid. Examples of the sulfonic acid include methanesulfonic acid, ethanesulfonic acid, benzenesulfonic acid, p-toluenesulfonic acid, and trifluoromethanesulfonic acid. Examples of the carboxylic acid include formic acid, acetic acid, citric acid, gluconic acid, lactic acid, oxalic acid, and tartaric acid. Among these, hydrochloric acid or sulfuric acid is particularly preferably used.

The temperature of the acid solution in the acid treatment is not particularly limited, but is, for example, preferably 5°C or higher and 100°C or lower, and more preferably 20°C or higher and 90°C or lower. The immersion time in the acid solution in the acid treatment is not particularly limited, but is, for example, preferably 5 minutes or more and 120 minutes or less, and more preferably 10 minutes or more and 60 minutes or less. The amount of the acid solution used in the acid treatment is not particularly limited, but is, for example, preferably 100% by mass or more and 100,000% by mass or less, and more preferably 1,000% by mass or more and 10,000% by mass or less with respect to the absolute dry mass of the fiber raw material.

<Defibration treatment step>

The fine fibrous cellulose is obtained by subjecting the fiber raw material or the ionic group-introduced fiber to a defibration treatment in a defibration treatment step. The defibration treatment is also referred to as a refinement treatment. In the defibration treatment step, for example, a defibration treatment device can be used. The defibration treatment device is not particularly limited, but for example, a high-speed defibration machine, a grinder (stone mill pulverizer), a high-pressure homogenizer or an ultra-high pressure homogenizer, a high-pressure collision pulverizer, a ball mill, a bead mill, a disc refiner, a conical refiner, a twin screw kneader, a vibration mill, a homomixer under high-speed rotation, an ultrasonic disperser, a beater, or the like can be used. Among the above defibration treatment devices, it is more preferable to use a high-speed defibration machine, a high-pressure homogenizer, and an ultra-high pressure homogenizer which are less affected by grinding media and are less likely to cause contamination.

In the defibration treatment step, for example, the fiber raw material or the ionic group-introduced fiber is preferably diluted with a dispersion medium to form a slurry. As the dispersion medium, one or two or more selected from water and organic solvents such as a polar organic solvent can be used. The polar organic solvent is not particularly limited, but for example, alcohols, polyhydric alcohols, ketones, ethers, esters, and aprotic polar solvents are preferable. Examples of the alcohols include methanol, ethanol, isopropanol, n-butanol, and isobutyl alcohol. Examples of the polyhydric alcohols include ethylene glycol, propylene glycol, and glycerin. Examples of the ketones include acetone and methyl ethyl ketone (MEK). Examples of the ethers include diethyl ether, tetrahydrofuran, ethylene glycol monomethyl ether, ethylene glycol monoethyl ether, ethylene glycol mono-n-butyl ether, and propylene glycol monomethyl ether. Examples of the esters include ethyl acetate and butyl acetate. Examples of the aprotic polar solvent include dimethylsulfoxide (DMSO), dimethylformamide (DMF), dimethylacetamide (DMAc), and N-methyl-2-pyrrolidinone (NMP).

The solid content concentration of the fine fibrous cellulose during the defibration treatment can be appropriately set. The slurry obtained by dispersing the ionic group-introduced fiber in a dispersion medium may contain a solid content other than the ionic group-introduced fiber, for example, urea having a hydrogen bonding property.

<Substituent removal treatment>

The method for producing a fine fibrous cellulose may include a substituent removal treatment step of removing at least a part of the substituent from a fine fibrous cellulose having a substituent and a fiber width of 1,000 nm or less. In the present specification, the step of removing at least a part of the substituent from the fine fibrous cellulose obtained in the steps described above is also referred to as a substituent removal treatment step.

Examples of the substituent removal treatment step include a step of subjecting a fine fibrous cellulose having a substituent and a fiber width of 1,000 nm or less to a heat treatment, a step of subjecting the fine fibrous cellulose to an enzyme treatment, a step of subjecting the fine fibrous cellulose to an acid treatment, and a step of subjecting the fine fibrous cellulose to an alkali treatment. These treatments may be performed alone or in combination. Among them, the substituent removal treatment step is preferably a heat treatment step or an enzyme treatment step. Through the above treatment step, at least a part of the substituent is removed from the fine fibrous cellulose having a substituent and a fiber width of 1,000 nm or less, whereby a fine fibrous cellulose in which the amount of substituents introduced is less than 0.5 mmol/g can be obtained.

The substituent removal treatment step is preferably performed in a slurry form. That is, the substituent removal treatment step is preferably a step of subjecting a slurry containing a fine fibrous cellulose having a substituent and a fiber width of 1,000 nm or less to a heat treatment, a step of subjecting the slurry to an enzyme treatment, a step of subjecting the slurry to an acid treatment, a step of subjecting the slurry to an alkali treatment, or the like. By performing the substituent

removal treatment step in a slurry form, it is possible to prevent coloring substances generated by heating or the like during the substituent removal treatment, and added or generated acids, alkalis, salts, and the like from remaining in the fine fibrous cellulose. Thus, coloring of the fine fibrous cellulose can be suppressed. In addition, when salts derived from the substituent removed after the substituent removal treatment are subjected to a removal treatment, it is also possible to increase the salt removal efficiency.

When a slurry containing a fine fibrous cellulose having a substituent and a fiber width of 1,000 nm or less is subjected to a substituent removal treatment, the concentration of the fine fibrous cellulose in the slurry is preferably 0.05% by mass or more and 20% by mass or less, more preferably 0.1% by mass or more, and still more preferably 0.2% by mass or more, and more preferably 15% by mass or less, and still more preferably 10% by mass or less. By setting the concentration of the fine fibrous cellulose in the slurry within the above range, the substituent removal treatment can be more efficiently performed. Furthermore, by setting the concentration of the fine fibrous cellulose in the slurry within the above range, it is possible to prevent coloring substances generated by heating or the like during the substituent removal treatment, and added or generated acids, alkalis, salts, or the like from remaining in the fine fibrous cellulose. This makes it possible to suppress coloring of the resulting fine fibrous cellulose. In addition, when salts derived from the substituent removed after the substituent removal treatment are subjected to a removal treatment, it is also possible to increase the salt removal efficiency.

When the substituent removal treatment step is a step of subjecting a fine fibrous cellulose having a substituent and a fiber width of 1,000 nm or less to a heat treatment, the heating temperature in the heat treatment step is preferably 40°C or higher and 250°C or lower, more preferably 50°C or higher, and still more preferably 60°C or higher, and more preferably 230°C or lower and still more preferably 200°C or lower. In particular, when the substituent of the fine fibrous cellulose to be subjected to the substituent removal treatment step is a phosphorus oxoacid group or a sulfonic acid group, the heating temperature in the heat treatment step is preferably 80°C or higher, more preferably 100°C or higher, and still more preferably 120°C or higher.

When the substituent removal treatment step is a step of performing a heat treatment, the heating device that can be used in the heat treatment step is not particularly limited, but a hot-air heating device, a steam heating device, an electric heating device, a hydrothermal heating device, a thermal heating device, an infrared heating device, a far infrared heating device, a microwave heating device, a high frequency heating device, a stirring and drying device, a rotary drying device, a disk drying device, a roll type heating device, a plate type heating device, a fluidized bed drying device, a band type drying device, a filtration drying device, a vibration fluidizing drying device, an airflow drying device, or a reduced pressure drying device can be used. From the viewpoint of preventing evaporation, heating is preferably performed in a sealed system, and from the viewpoint of further increasing the heating temperature, heating is preferably performed in a pressure-resistant device or container. The heat treatment may be a batch treatment, a batch continuous treatment, or a continuous treatment.

When the substituent removal treatment step is a step of subjecting a fine fibrous cellulose having a substituent and a fiber width of 1,000 nm or less to an enzyme treatment, a phosphate ester hydrolase, a sulfate ester hydrolase or the like is preferably used in the enzyme treatment step.

In the enzyme treatment step, it is preferable to add an enzyme so that the enzyme activity is 0.1 nkat or more and 100,000 nkat or less, more preferably 1.0 nkat or more, still more preferably 10 nkat or more, and more preferably 50,000 nkat or less, still more preferably 10,000 nkat or less with respect to 1 g of the fine fibrous cellulose. After the enzyme is added to the fine fibrous cellulose dispersion (slurry), it is preferable to perform treatment for 1 minute or more and 100 hours or less under the condition of 0°C or higher and lower than 50°C.

After the enzyme reaction, a step of deactivating the enzyme may be provided. Examples of the method for deactivating the enzyme include a method in which an acid component or an alkali component is added to the slurry subjected to the enzyme treatment to deactivate the enzyme, and a method in which the temperature of the slurry subjected to the enzyme treatment is raised to 90°C or higher to deactivate the enzyme.

When the substituent removal treatment step is a step of subjecting a fine fibrous cellulose having a substituent and a fiber width of 1,000 nm or less to an acid treatment, in the acid treatment step, an acidic compound that can be used in the above acid treatment step is preferably added to the slurry.

When the substituent removal treatment step is a step of subjecting a fine fibrous cellulose having a substituent and a fiber width of 1,000 nm or less to an alkali treatment, in the alkali treatment step, an alkali compound that can be used in the above alkali treatment step is preferably added to the slurry.

In the substituent removal treatment step, it is preferable that the substituent removal reaction proceeds uniformly. In order to uniformly proceed the reaction, for example, the slurry containing a fine fibrous cellulose may be stirred, or the specific surface area of the slurry may be increased. As a method for stirring the slurry, external mechanical shear may be given to the slurry, or self-stirring may be promoted by increasing the feeding speed of the slurry during the reaction.

In the substituent removal treatment step, spacer molecules may be added. The spacer molecules enter between adjacent fine fibrous celluloses, thereby acting as spacers for providing small spaces between the fine fibrous celluloses.

In the substituent removal treatment step, by adding such spacer molecules, aggregation of fine fibrous celluloses after the substituent removal treatment can be suppressed. This makes it possible to more effectively enhance the designability and tensile properties of a rubber composition, a crosslinked rubber, and a crosslinked rubber product containing the fine fibrous cellulose.

The spacer molecule is preferably a water-soluble organic compound. Examples of the water-soluble organic compound include sugars, water-soluble polymers, and urea. Specific examples of the water-soluble organic compound include trehalose, urea, polyethylene glycol (PEG), polyethylene oxide (PEO), carboxymethyl cellulose, and polyvinyl alcohol (PVA). In addition, examples of the water-soluble organic compound that can be used include an alkyl methacrylate-acrylic acid copolymer, polyvinyl pyrrolidone, sodium polyacrylate, propylene glycol, dipropylene glycol, polypropylene glycol, isoprene glycol, hexylene glycol, 1,3-butylene glycol, polyacrylamide, xanthan gum, guar gum, tamarind gum, carrageenan, locust bean gum, quince seed, alginic acid, pullulan, carrageenan, pectin, starches such as cationized starch, raw starch, oxidized starch, etherified starch, esterified starch, and amylose, glycerin, diglycerin, polyglycerin, hyaluronic acid, and a metal salt of hyaluronic acid.

In addition, a known pigment can be used as the spacer molecule. Examples of the known pigment include kaolin (containing clay), calcium carbonate, titanium oxide, zinc oxide, amorphous silica (containing colloidal silica), aluminum oxide, zeolite, sepiolite, smectite, synthetic smectite, magnesium silicate, magnesium carbonate, magnesium oxide, diatomaceous earth, a styrene-based plastic pigment, hydrotalcite, a urea resin-based plastic pigment, and a benzoguanamine-based plastic pigment.

<pH adjustment step>

When the substituent removal treatment step is performed in a slurry form, a step of adjusting the pH of the slurry containing a fine fibrous cellulose may be provided before the substituent removal treatment step. For example, when an anionic group is introduced into the cellulose fiber and the counter ion of the anionic group is $Na^+$, the slurry containing a fine fibrous cellulose after defibration exhibits weak alkalinity. When the slurry is heated in this state, a monosaccharide which is one of the coloring factors may be generated due to the decomposition of cellulose. Therefore, the pH of the slurry is preferably adjusted to 8 or less, and more preferably adjusted to 6 or less. In addition, since the monosaccharide may be generated also under acidic conditions, the pH of the slurry is adjusted to preferably 3 or more, and more preferably 4 or more.

When the fine fibrous cellulose having a substituent is a fine fibrous cellulose having a phosphoric acid group, the phosphorus of the phosphoric acid group is preferably in a state of being susceptible to nucleophilic attack from the viewpoint of improving the removal efficiency of the substituent. The state in which the phosphorus of the phosphoric acid group is susceptible to nucleophilic attack is a state in which the degree of neutralization is 1 represented by cellulose -O-P(=O)($-O^-H^+$)($-O^-Na^+$). In order to achieve this state, the pH of the slurry is preferably adjusted to 3 or more and 8 or less, and more preferably 4 or more and 6 or less.

The means for adjusting the pH is not particularly limited, but for example, an acid component or an alkali component may be added to the slurry containing a fine fibrous cellulose. The acid component may be either an inorganic acid or an organic acid, and examples of the inorganic acid include sulfuric acid, hydrochloric acid, nitric acid, and phosphoric acid. Examples of the organic acid include formic acid, acetic acid, citric acid, malic acid, lactic acid, adipic acid, sebacic acid, stearic acid, maleic acid, succinic acid, tartaric acid, fumaric acid, and gluconic acid. The alkali component may be an inorganic alkali compound or an organic alkali compound. Examples of the inorganic alkali compound include lithium hydroxide, sodium hydroxide, potassium hydroxide, lithium carbonate, lithium hydrogen carbonate, potassium carbonate, potassium hydrogen carbonate, sodium carbonate, and sodium hydrogen carbonate. Examples of the organic alkali compound include ammonia, hydrazine, methylamine, ethylamine, diethylamine, triethylamine, propylamine, dipropylamine, butylamine, diaminoethane, diaminopropane, diaminobutane, diaminopentane, diaminohexane, cyclohexylamine, aniline, tetramethylammonium hydroxide, tetraethylammonium hydroxide, tetrapropylammonium hydroxide, tetrabutylammonium hydroxide, benzyltrimethylammonium hydroxide, pyridine, and N,N-dimethyl-4-aminopyridine.

In the pH adjustment step, an ion exchange treatment may be performed to adjust the pH. In the ion exchange treatment, a strongly acidic cation exchange resin or a weakly acidic ion exchange resin can be used. By treating the slurry with an appropriate amount of cation exchange resin for a sufficient time, a slurry containing a fine fibrous cellulose having a desired pH can be obtained. Furthermore, in the pH adjustment step, addition of an acid component or an alkali component may be combined with an ion exchange treatment.

<Salt removal treatment>

After the substituent removal treatment step, it is preferable to perform a treatment of removing salts derived from the removed substituent. By removing the salts derived from the substituent, it becomes easy to obtain a fine fibrous cellulose capable of suppressing coloring. The means for removing the salts derived from the substituent is not particularly

limited, and examples thereof include a washing treatment. The washing treatment is performed, for example, by washing the fine fibrous cellulose aggregated by the substituent removal treatment with water or an organic solvent. From the viewpoint of more effectively suppressing yellowing, the washing treatment is preferably performed by filtration dehydration, centrifugal dehydration, or centrifugation.

<Uniform dispersion treatment>

The method for producing a fine fibrous cellulose may include a substituent removal treatment step of removing at least a part of the substituent from a fine fibrous cellulose having a substituent and a fiber width of 1,000 nm or less, and a step of performing a uniform dispersion treatment after the substituent removal treatment. The step of performing a uniform dispersion treatment is a step of uniformly dispersing the fine fibrous cellulose obtained through the substituent removal treatment in the substituent removal treatment step. The uniformly dispersed state of the fine fibrous cellulose in the step of performing a uniform dispersion treatment refers to a state in which the fiber width of the fine fibrous cellulose is 100 nm or less. Through the step of performing a uniform dispersion treatment, the number average fiber width of the fine fibrous cellulose is easily set to 100 nm or less, preferably 50 nm or less, although the amount of substituents introduced is as low as less than 0.5 mmol/g.

In the step of performing a uniform dispersion treatment, for example, a high-speed defibration machine, a grinder (stone mill pulverizer), a high-pressure homogenizer, a high-pressure collision pulverizer, a ball mill, a bead mill, a disc refiner, a conical refiner, a twin screw kneader, a vibration mill, a homomixer under high-speed rotation, an ultrasonic disperser, a beater, or the like can be used. Among the above uniform dispersion treatment devices, it is more preferable to use a high-speed defibration machine and a high-pressure homogenizer.

The treatment conditions in the step of performing a uniform dispersion treatment are not particularly limited, but it is preferable to increase the maximum moving speed of the fine fibrous cellulose during the treatment and the pressure applied during the treatment. In the high-speed defibration machine, the peripheral speed is preferably 20 m/sec or more, more preferably 25 m/sec or more, and still more preferably 30 m/sec or more. The high-pressure homogenizer can be more preferably used than the high-speed defibration machine because the maximum moving speed of the fine fibrous cellulose during the treatment and the pressure applied during the treatment increase. In the high-pressure homogenizer treatment, the pressure applied during the treatment is preferably 1 MPa or more and 350 MPa, more preferably 10 MPa or more, still more preferably 50 MPa or more, and further still more preferably 100 MPa or more, and more preferably 300 MPa or less and still more preferably 250 MPa or less.

In the step of performing a uniform dispersion treatment, the above spacer molecules may be newly added. In the uniform dispersion treatment step, by adding such spacer molecules, uniform dispersion of the fine fibrous cellulose can be more smoothly performed.

[Rubber component]

The rubber composition of the present embodiment contains rubber in addition to the fine fibrous cellulose described above.

As the rubber component, for example, natural rubber (NR) and synthetic rubber can be used.

Examples of the synthetic rubber include styrene-butadiene rubber (SBR), nitrile rubber (NBR), chloroprene rubber (CR), ethylene propylene rubber (EPDM), butyl rubber (IIR), chlorobutyl rubber (CIIR), acrylic rubber (ACM), silicone rubber (Q), fluororubber (FKM), butadiene rubber (BR), epoxidized butadiene rubber (EBR), epichlorohydrin rubber (CO,CEO), urethane rubber (U), and polysulfide rubber (T). Examples of the nitrile rubber include hydrogenated nitrile rubber, modified nitrile rubbers such as carboxy group-modified nitrile rubber, silicone-modified nitrile rubber, maleic acid-modified nitrile rubber, and hydroxy group-modified nitrile rubber, or hydrogenated products thereof, and acrylonitrile-butadiene-isoprene copolymers in which a part of butadiene is substituted with isoprene. The hydrogenated nitrile rubber (H-NBR) may be referred to as hydrogenated nitrile butadiene rubber, hydrogenated acrylonitrile-butadiene rubber, or the like. The hydrogenated nitrile rubber can be obtained by hydrogenating double bonds contained in the nitrile rubber.

Examples of the natural rubber include, in addition to natural rubber (NR), modified natural rubbers such as epoxidized natural rubber (ENR) and methyl methacrylate (MMA) grafted natural rubber, hydrogenated natural rubber, and deproteinized natural rubber.

These rubber components may be used singly, or two or more thereof may be used in combination. These rubber components may be a raw material before crosslinking having no crosslinked structure, or may have a crosslinked structure.

Among them, the rubber component is preferably at least one selected from natural rubber, nitrile rubber, butadiene rubber, and styrene-butadiene rubber, more preferably at least one selected from natural rubber, nitrile rubber, and styrene-butadiene rubber, and still more preferably at least one selected from natural rubber, carboxylated nitrile rubber, and styrene-butadiene rubber.

The rubber component may be a raw material before crosslinking. The rubber component is preferably a latex of these rubber components. By using the latex of the rubber component, the dispersibility of the fine fibrous cellulose is improved, and a composite material having excellent tensile properties is easily obtained.

When the latex of the rubber component is used, a solid rubber component may be further mixed. The solid rubber component may be added when the rubber composition is masticated, or may be added when the rubber compound is prepared, but is preferably added when the rubber compound is prepared.

In the rubber composition of the present embodiment, the content of the fine fibrous cellulose based on 100 parts by mass of the rubber component is preferably 1 part by mass or more and 200 parts by mass or less, more preferably 2 parts by mass or more, still more preferably 4 parts by mass or more, further still more preferably 8 parts by mass or more, yet more preferably 12 parts by mass or more, and still even more preferably 15 parts by mass or more, and is preferably 150 parts by mass or less, more preferably 100 parts by mass or less, still more preferably 80 parts by mass or less, further still more preferably 60 parts by mass or less, yet more preferably 40 parts by mass or less, and still even more preferably 20 parts by mass or less from the viewpoint of obtaining a rubber composition having good kneadability and excellent characteristics after crosslinking.

The total amount of the fine fibrous cellulose and the rubber component in the rubber composition is preferably 50% by mass or more, more preferably 70% by mass or more, still more preferably 90% by mass or more, and the upper limit thereof is not particularly limited and is 100% by mass or less.

In the present embodiment, the rubber composition may contain other components in addition to the fine fibrous cellulose and the rubber component described above.

Examples of the other component include a coarse cellulose fiber having a fiber width of more than 1 μm (1,000 nm). The fiber width of the coarse cellulose fiber contained in the rubber composition of the present embodiment is not particularly limited, but is, for example, preferably 1 μm or more and 100 μm or less, more preferably 5 μm or more, still more preferably 10 μm or more, and more preferably 50 μm or less, still more preferably 40 μm or less. The fiber width of the coarse cellulose fiber can be measured by a fiber length distribution measuring apparatus (for example, FS5, manufactured by Valmet Corporation, and L&W Fiber Tester Plus, manufactured by ABB Ltd.).

The coarse cellulose fiber preferably has an ionic substituent from the viewpoint of improving the dispersibility in the rubber composition. A preferred embodiment of the ionic substituent is the same as that of the fine fibrous cellulose, and the type and a preferred range of the amount of the substituent is also the same.

When the rubber composition contains a coarse cellulose fiber, the content of the coarse cellulose fiber based on 100 parts by mass of the rubber component is preferably 0.5 parts by mass or more and 80 parts by mass or less, more preferably 1 part by mass or more, still more preferably 3 parts by mass or more, and more preferably 50 parts by mass or less, still more preferably 20 parts by mass or less.

When the rubber composition contains a coarse cellulose fiber, the content of the coarse cellulose fiber based on 100 parts by mass of the total of the fine fibrous cellulose and the coarse cellulose fibers is preferably 1 part by mass or more and 95 parts by mass or less, more preferably 3 parts by mass or more, and still more preferably 5 parts by mass or more, and preferably 90 parts by mass or less and more preferably 85 parts by mass or less.

When the content of the coarse cellulose fiber is within the above range, the coarse cellulose fiber can be produced at a lower cost as compared with the fine fibrous cellulose. Thus, the rubber composition can be produced at a lower cost, and a rubber composition excellent in kneadability as well as physical properties after crosslinking can be obtained, which is preferable.

The rubber composition of the present embodiment may contain zinc oxide, a vulcanization promotion aid, an antiaging agent, a reinforcing agent, and the like as other components, and these components may be added in any step of the production process.

[Method for producing rubber composition]

The method for producing a rubber composition is not particularly limited, but it is preferable to produce the rubber composition by preparing a dispersion containing at least a rubber component and a fine fibrous cellulose and then removing the dispersion medium from the dispersion. That is, the method preferably includes a mixing step of mixing an aqueous dispersion of a fine fibrous cellulose having a fiber width of 1,000 nm or less with a rubber latex to obtain a dispersion containing a fine fibrous cellulose and a rubber component, and a drying step of heating and drying the dispersion to obtain a rubber composition.

In the above production method, it is preferable to first mix a fine fibrous cellulose and a rubber component to prepare a dispersion (hereinafter, also simply referred to as "dispersion of mixture") of a mixture thereof in an aqueous medium.

Specifically, a fine fibrous cellulose and a rubber component are mixed and dispersed in an aqueous medium to obtain a dispersion of the mixture. It is also possible to obtain a dispersion of the mixture by mixing an aqueous dispersion of a fine fibrous cellulose with an aqueous dispersion of a rubber component. Among them, it is preferable to obtain a

dispersion containing a fine fibrous cellulose and a rubber component by mixing a dispersion of a fine fibrous cellulose with an aqueous dispersion of a rubber component. Examples of the aqueous dispersion of the rubber component include a rubber latex.

Mixing can be performed using known devices such as a disperser, Three-One motor, CLEARMIX, a homomixer, a homogenizer, or a propeller stirrer. The mixing temperature is not limited, but is preferably room temperature (20 to 30°C). The mixing time can also be appropriately adjusted.

When the fine fibrous cellulose and the rubber component are sufficiently mixed in the preparation of the dispersion of the mixture, the physical properties after crosslinking tend to be improved.

The rubber latex is preferably a dispersion of a rubber component in an aqueous medium. The aqueous medium contains water as a main component, and the content ratio of water to the entire aqueous medium is preferably 50% by mass or more, more preferably 80% by mass or more, still more preferably 90% by mass or more, and further still more preferably 95% by mass or more, and the upper limit thereof is not particularly limited but is 100% by mass or less. The aqueous medium may contain a known organic solvent or the like in addition to water to such an extent that the effect of the present disclosure is not impaired.

The solid content concentration (mass basis) of the dispersion of the mixture is preferably 0.5% by mass or more and 50% by mass or less, more preferably 1% by mass or more, still more preferably 3% by mass or more, and more preferably 40% by mass or less, still more preferably 30% by mass or less. When the solid content concentration of the dispersion of the mixture is within the above range, the amount of energy required for removing water can be reduced, and further, in the resulting rubber composition, aggregation of fine fibrous celluloses hardly occurs. Thus, the kneadability of the resulting rubber composition and the characteristics of the crosslinked product are excellent.

The solid content concentration of the dispersion of the mixture can be calculated by the following formula (I) from the mass of a dried product obtained by drying a predetermined amount of the dispersion in a dryer at 105°C to constant weight, and the mass of the dispersion of the mixture subjected to drying.

Solid content concentration of dispersion of mixture (% by mass) = mass of dried product [g]/mass of dispersion of mixture subjected to drying [g] $\times$100 (I)

The rubber composition is obtained by heating and drying the obtained dispersion of the mixture.

The heating and drying method is not particularly limited, and examples thereof include a method of applying a dispersion of the mixture onto a substrate, and a method of drying a dispersion of the mixture with a drum dryer.

In the coating method, for example, a dispersion of the mixture containing a fine fibrous cellulose and a rubber component is applied onto a substrate. When a coating device and a long substrate are used, the sheet can be continuously produced.

The material of the substrate to be used in the coating method is not particularly limited, but a substrate having high wettability to the dispersion of the mixture may be favorable because such a substrate suppresses shrinkage of the sheet during drying, and it is preferable to select a substrate from which the sheet formed after drying can be easily peeled off. Among them, a resin film or a resin plate, or a metal film or a metal plate is preferable, but is not particularly limited. Examples of the film or plate that can be used include films or plates made of a resin such as acryl, polyethylene terephthalate, vinyl chloride, polystyrene, polypropylene, polycarbonate, or polyvinylidene chloride, films or plates made of a metal such as aluminum, zinc, copper, or an iron plate, films or plates obtained by subjecting the surface thereof to an oxidation treatment, a film or a plate made of stainless steel, and a film or a plate made of brass.

In the coating method, when the dispersion of the mixture has a low viscosity and spreads on the substrate, a damming frame is fixed and used on the substrate in order to obtain a sheet having a predetermined thickness and basis weight. Alternatively, a substrate on which a vat-like dam is formed may be used. The damming frame is not particularly limited, but for example, it is preferable to select a damming frame from which the edges of the dried sheet adhered to the frame can be easily peeled off. From such a viewpoint, a damming frame formed from a resin plate or a metal plate is preferable. In the present embodiment, examples of the frame that can be used include frames formed from a resin plate such as an acrylic plate, a polyethylene terephthalate plate, a vinyl chloride plate, a polystyrene plate, a polypropylene plate, a polycarbonate plate, or a polyvinylidene chloride plate, frames formed from a metal plate such as an aluminum plate, a zinc plate, a copper plate, or an iron plate, frames formed from a plate obtained by subjecting the surface thereof to an oxidation treatment, a frame formed from a stainless steel plate, and a frame formed from a brass plate.

The coating machine for applying the dispersion of the mixture to the substrate is not particularly limited, and for example, a roll coater, a gravure coater, a die coater, a curtain coater, an air doctor coater, or the like can be used. A die coater, a curtain coater, and a spray coater are particularly preferable because the thickness of the sheet can be made more uniform.

The dispersion temperature and the ambient temperature (hereinafter, the dispersion temperature and the ambient temperature of the mixture are collectively referred to as "coating temperature".) of the mixture when the

dispersion of the mixture is applied to the substrate are not particularly limited, and are, for example, preferably 5°C or higher and 80°C or lower, more preferably 10°C or higher and 60°C or lower, still more preferably 15°C or higher and 50°C or lower, and further still more preferably 20°C or higher and 50°C or lower. When the coating temperature is the above lower limit value or more, the dispersion of the mixture can be more easily applied. When the coating temperature is the above upper limit value or less, volatilization of the dispersion medium during coating can be suppressed.

The drying device to be used is not particularly limited, and examples thereof include an explosion-proof dryer.

In the coating step, the dispersion of the mixture is preferably applied to the substrate so that the finished basis weight of the sheet and the thickness of the sheet fall within the above preferable ranges.

The dispersion of the mixture may be heated and dried with a heated cylindrical heater to obtain a rubber composition.

Fig. 3 is a schematic side cross-sectional view of a double drum dryer 10 which is an example of a heated cylindrical dryer, and Fig. 4 is a schematic side view of the double drum dryer 10.

First, a heat medium (generally, steam) is charged into a rotating cylinder 1 (drum), and the dispersion of the mixture is charged into a feed unit 2. The charged dispersion of the mixture adheres to the surface of the heated cylinder 1 as a sheet-shaped mixture 3, and the sheet-shaped mixture 3 is quickly heated and dried. As the cylinder 1 rotates, the sheet-shaped mixture 3 is scraped off by a scraper 4 which is fixed, and thus a rubber composition 5 (heat-dried product) can be obtained.

The lower limit value of the surface temperature of the heated cylindrical dryer is preferably 80°C or higher, and more preferably 90°C or higher. The upper limit value of the surface temperature is preferably 250°C or lower, and more preferably 200°C or lower.

The surface temperature of the heated cylindrical dryer is the temperature of the cylindrical surface with which the mixture comes into contact. The surface temperature of the heated cylindrical dryer may be, for example, 80 to 250°C, 90 to 200°C, or 95 to 180°C. When the surface temperature of the heated cylindrical dryer is within the above range, a rubber composition having high production efficiency, excellent kneadability, and excellent physical properties after crosslinking can be obtained.

The lower limit value of the heating and drying time by the heated cylindrical dryer is preferably 2 seconds or more, and more preferably 4 seconds or more. The upper limit value of the heating and drying time is preferably 1,800 seconds or less, and more preferably 600 seconds or less.

The heating and drying time [sec] in the heated cylindrical dryer is the time [sec] during which the mixture is in contact with the surface of the cylinder, and the heating and drying time may be, for example, 2 to 1,800 seconds, 4 to 600 seconds, or 6 to 400 seconds. When the heating and drying time is within the above range, a dried product that is neither undried nor overdried is obtained, and the peelability from the drum is excellent.

The lower limit value of the cylinder width w of the heated cylindrical dryer is preferably 0.1 m or more, and more preferably 0.2 m or more. The upper limit value of the cylinder width w is not particularly limited, but is usually 7 m or less.

The cylinder width w may be, for example, 0.1 to 7 m or 0.2 to 5 m. When the cylinder width w is within the above range, a dried product having a uniform thickness can be obtained.

The lower limit value of the cylinder rotation speed v of the heated cylindrical dryer is preferably 0.001 [m/sec] or more, and more preferably 0.002 [m/sec]. The upper limit value of the cylinder rotation speed v is not particularly limited, but is usually 35 [m/sec] or less.

The cylinder rotation speed v may be, for example, 0.001 to 3.5 [m/sec] or 0.002 to 0.2 [m/sec]. When the cylinder rotation speed v is within the above range, the time during which the mixture is in contact with the heated drum can be set within an appropriate range, and a dried product excellent in kneadability and physical properties after crosslinking can be obtained.

The heated cylindrical dryer used in the method for producing a rubber composition may be any conductive heating type dryer that performs heating and drying by introducing a heat medium into a cylinder and bringing the mixture into contact with the surface of the heated cylinder. For example, a drum dryer such as a double drum dryer, a single drum dryer, or a twin drum dryer may be used, and a cylinder dryer, a Yankee dryer, or the like can be used. Among them, from the viewpoint of heating and drying efficiency, the heated cylindrical dryer is preferably a double drum dryer or a cylinder dryer.

[Characteristics of rubber composition]

<Water content>

The rubber composition of the present embodiment has a water content of 15% or less. When the water content is 15% or less, the kneadability of the rubber composition is excellent, which is preferable.

The water content of the rubber composition is preferably 12% or less, more preferably 8% or less, still more preferably 6% or less, and further still more preferably 5% or less, and the lower limit thereof is not particularly limited, but is preferably 0.1% or more from the viewpoint of ease of production.

The water content can be adjusted to fall within a desired range by adjusting the drying temperature and drying time at the time of producing the rubber composition.
The water content is measured by the method described in Examples.
As described later, when the rubber composition is not in the form of a sheet, it is necessary to process the rubber composition into a sheet in order to measure the value obtained by dividing the piercing strength (N) by the thickness or the value obtained by dividing the piercing elongation (mm) by the thickness (mm), which will be described later. Even in such a case, it is preferable to measure the water content of the rubber composition before processing the rubber composition into a sheet. When the rubber composition is processed into a sheet, it is preferable to process the rubber composition into a sheet without performing excessive heating or the like so that the water content of the rubber composition does not fluctuate.

<Value obtained by dividing piercing strength (N) by thickness (mm)>

In the sheet composed of the rubber composition of the present embodiment, the value obtained by dividing the piercing strength (N) by the thickness is 3 N/mm or more. When the value is 3 N/mm or more, physical properties of the rubber composition after crosslinking are excellent, which is preferable.
The value obtained by dividing the piercing strength (N) by the thickness (mm) is preferably 4 N/mm or more, more preferably 5 N/mm or more, still more preferably 7 N/mm or more, and the upper limit thereof is not particularly limited, but is preferably 50 N/mm or less from the viewpoint of ease of production.
A method for adjusting the value obtained by dividing the piercing strength (N) by the thickness (mm) to a desired range is not particularly limited, but when a more uniform dispersion state is achieved at the time of adjusting the dispersion of the mixture containing a fine fibrous cellulose and a rubber component, the value tends to be high. In addition, when the water content of the rubber composition is reduced, the value tends to be high. Furthermore, the value can be adjusted to the above range by adjusting the fiber diameter and amount of the fine fibrous cellulose blended, the type and amount of the ionic substituent, the type and amount of the rubber component blended, the dispersion diameter of the rubber latex, the drying conditions (drying temperature and the like) when producing the rubber composition, and the like.
When the rubber composition is obtained in the form of a sheet, the sheet-shaped rubber composition is fixed with a jig and pierced with a needle at 20 mm/min, and the maximum stress (N) until the needle penetrates the sheet-shaped rubber composition is measured. Next, by dividing the maximum stress (N) until the needle penetrates the sheet by the thickness of the sheet, the value obtained by dividing the piercing strength (N) by the thickness (mm) is calculated.
On the other hand, when the rubber composition is not in the form of a sheet, the rubber composition is pulverized by an arbitrary method to be granulated and formed into a sheet using a press machine, a calender roll, a double roll, or the like, and then, the sheet is subjected to a piercing test to measure the piercing strength (N) and the thickness in the same manner, whereby the value obtained by dividing the piercing strength (N) by the thickness (mm) is calculated.
The following two methods are exemplified as the procedure for forming the rubber composition into a sheet, but the present invention is not limited thereto.

(1) Press the rubber composition with a press machine at 23±2°C, 15 MPa, for 10 minutes. Furthermore, the pressed rubber composition is passed through calender rolls to obtain a sheet-shaped rubber composition.
(2) Using a double roll, the rubber composition is passed between rolls at 23±2°C, a rotation speed of 10/10 rpm, and a clearance of 0.1 mm to obtain a sheet-shaped rubber composition.

The thickness of the sheet-shaped rubber composition (sheet composed of the rubber composition) to be measured is preferably 1 μm (0.001 mm) or more and 5,000 μm (5 mm) or less, more preferably 0.005 mm or more, still more preferably 0.01 mm or more, further still more preferably 0.03 mm or more, and more preferably 4 mm or less, still more preferably 3 mm or less, further still more preferably 2.5 mm or less from the viewpoint of ease of measurement and ease of production.

<Value obtained by dividing piercing elongation (mm) by thickness (mm)>

In the sheet composed of the rubber composition of the present embodiment, the value (piercing elongation (mm)/thickness (mm)) obtained by dividing the piercing elongation (mm) by the thickness (mm) is 400 or less. When the value is 400 or less, physical properties of the rubber composition after crosslinking are excellent, which is preferable. In addition, by setting the value obtained by dividing the piercing elongation (mm) by the thickness (mm) to 400 or less, rubber compositions which do not break even when being pulled exceeding the elongation limit, and which are difficult to measure the piercing strength are excluded.
The ratio is preferably 300 or less, more preferably 250 or less, still more preferably 200 or less, further still more preferably 150 or less, and yet more preferably 100 or less, and the lower limit is not particularly limited, but is preferably 1 or

more, more preferably 3 or more, still more preferably 5 or more, and further still more preferably 10 or more.

A method for adjusting the value obtained by dividing the piercing elongation (mm) by the thickness (mm) to a desired range is not particularly limited, but when a more uniform dispersion state is achieved at the time of adjusting the dispersion of the mixture containing a fine fibrous cellulose and a rubber component, the value tends to be low. The value can also be adjusted to the above range by adjusting the fiber diameter and amount of the fine fibrous cellulose blended, the type and amount of the ionic substituent, the type and amount of the rubber component blended, the dispersion diameter of the rubber latex, the drying conditions when producing the rubber composition, and the like.

When the rubber composition is obtained in the form of a sheet, the sheet-shaped rubber composition is fixed with a jig and pierced with a needle at 20 mm/min, and the elongation at penetration (mm) until the needle penetrates the sheet-shaped rubber composition is measured. Next, by dividing the elongation at penetration (mm) until the needle penetrates the sheet by the thickness of the sheet, the value obtained by dividing the elongation at penetration (mm) by the thickness (mm) is calculated.

On the other hand, when the rubber composition is not in the form of a sheet, the rubber composition is formed into a sheet in the same manner as in <Value obtained by dividing piercing strength (N) by thickness (mm)>, and then the sheet may be measured.

The preferable range of the thickness of the sheet-shaped rubber composition is as described above.

<Hardness>

The hardness of the sheet composed of the rubber composition of the present embodiment is preferably 40 or more, more preferably 45 or more, still more preferably 50 or more from the viewpoint of excellent physical properties after crosslinking, and the upper limit thereof is not particularly limited, but is preferably 100 or less, more preferably 90 or less from the viewpoint of ease of production.

A method for adjusting the hardness to a desired range is not particularly limited, but when a more uniform dispersion state is achieved at the time of adjusting the dispersion of the mixture containing a fine fibrous cellulose and a rubber component, the hardness tends to be high. In addition, when the fiber width of the fine fibrous cellulose or the coarse cellulose fiber is increased, the hardness tends to be high. Furthermore, when the amount of the fine fibrous cellulose blended is increased, the hardness tends to be high. The hardness can also be adjusted to the above range by adjusting the type and amount of the ionic substituent of the fine fibrous cellulose blended, the type and amount of the rubber component blended, the dispersion diameter of the rubber latex, the drying conditions when producing the rubber composition, and the like.

The hardness is a value measured by a durometer according to Examples in accordance with JIS K 6253-3:2012.

[Rubber compound]

In the present embodiment, the rubber compound is obtained by kneading a rubber composition, and means a composition before crosslinking.

The rubber compound preferably contains at least a crosslinking agent in addition to the rubber composition. The rubber compound may contain, in addition to the crosslinking agent, an additive that can be used as an additive in the rubber field, such as zinc oxide, a vulcanization promotion aid, a filler, a softener, a fatty acid, an antiaging agent, a peptizer, a colorant, a pH adjuster, and a cured resin. In addition, a solid rubber may be newly added to the rubber compound in addition to the rubber component used in preparing the rubber composition.

When the solid rubber is newly added, the solid rubber is the same as that exemplified as the rubber component, but a rubber in a solid form (solid rubber) may be added instead of being added in a latex form.

Examples of the crosslinking agent include sulfur-based crosslinking agents (for example, sulfur such as powdered sulfur, sulfur flower, precipitated sulfur, colloidal sulfur, surface-treated sulfur, and insoluble sulfur; sulfur-containing compounds such as amine disulfide, polymeric polysulfide, sulfur olefin adducts, sulfur chloride, and sulfur dichloride; and insoluble polymer sulfur), peroxide-based crosslinking agents (for example, dicumyl peroxide, dichlorobenzoyl peroxide, benzoyl peroxide, 1,1-di(t-butylperoxy)-3,3,5-trimethylcyclohexane, n-butyl-4,4-bis(t-butylperoxy) valerate, di-t-butylperoxy-di-isopropylbenzene, and 2,5-dimethyl-2,5-di(t-butylperoxy)hexane), and quinoid-based crosslinking agents (for example, p-quinone dioxime and p,p'-dibenzoylquinone dioxime). Among these, a sulfur-based crosslinking agent or a peroxide-based crosslinking agent is preferable.

The amount of the crosslinking agent added is not particularly limited, but is preferably 0.1 parts by mass or more and 10 parts by mass or less, more preferably 0.5 parts by mass or more and still more preferably 1.0 parts by mass or less, and preferably 5 parts by mass or less, more preferably 3 parts by mass or less based on 100 parts by mass of the rubber component.

In addition, the rubber compound may contain a crosslinking accelerator having an action of promoting crosslinking by a crosslinking agent. When a sulfur-based crosslinking agent is used, the rubber compound preferably contains

a crosslinking accelerator (vulcanization accelerator).

When the sulfur-based crosslinking agent (vulcanizing agent) is used as the crosslinking agent, it is preferable to use, as the crosslinking accelerator (vulcanization accelerator), a sulfenamide-based vulcanization accelerator, a guanidine-based vulcanization accelerator, a thiazole-based vulcanization accelerator, a thiuram-based vulcanization accelerator, a dithiocarbamate-based vulcanization accelerator, or the like.

Examples of the filler include carbon black and silica. These fillers may be used singly, or two or more thereof may be used in combination. The content of the filler is not particularly limited, and is preferably 10 parts by mass or more and 150 parts by mass or less, and more preferably 20 parts by mass or more and 100 parts by mass or less based on 100 parts by mass of the rubber component.

Examples of the softener include aromatic oils, paraffin oils, naphthenic oils, vegetable oils other than castor oil, low PCA oils such as MES, TDAE, and SRAE, and heavy naphthenic oils. Suitable low PCA oils include various plant-derived oils that can be harvested from vegetables, nuts, and seeds. Examples of the plant-derived oil include soybean oil, sunflower oil, safflower oil, corn oil, linseed oil, cottonseed oil, rapeseed oil, cashew oil, sesame oil, camellia oil, jojoba oil, macadamia nut oil, coconut oil, and palm oil.

The content of the softener is preferably 1 part by mass or more and 35 parts by mass or less, more preferably 5 parts by mass or more, and still more preferably 10 parts by mass or more, and is more preferably 30 parts by mass or less and still more preferably 25 parts by mass or less based on 100 parts by mass of the rubber component.

Examples of the fatty acid include stearic acid, palmitic acid, arachidic acid, oleic acid, linoleic acid, and arachidonic acid. Among them, stearic acid is preferable.

The content of the fatty acid is not particularly limited, and is preferably 0.1 parts by mass or more and 5 parts by mass or less, and more preferably 1 part by mass or more and 4 parts by mass or less based on 100 parts by mass of the rubber component.

Examples of the antiaging agent include N-(1,3-dimethylbutyl)-N'-phenyl-p-phenylenediamine (6PPD), 2,2,4-trimethyl-1,2-dihydroquinoline polymer (TMDQ), 6-ethoxy-2,2,4-trimethyl-1,2-dihydroquinoline (AW), N,N'-diphenyl-p-phenylenediamine (DPPD), and 2-mercaptobenzimidazole (MBI). The antiaging agent may be used singly, or two or more thereof may be used in combination.

The content of the antiaging agent is not particularly limited, and is preferably 0.1 parts by mass or more and 5 parts by mass or less, and more preferably 1 part by mass or more and 3 parts by mass or less based on 100 parts by mass of the rubber component.

The content of the zinc oxide (zinc flower) is not particularly limited, and is preferably 1 part by mass or more and 10 parts by mass or less, and more preferably 2 parts by mass or more and 8 parts by mass or less based on 100 parts by mass of the rubber component.

[Method for producing rubber compound]

The method for producing a rubber compound is not particularly limited, but includes at least a kneading step of kneading the rubber composition of the present embodiment.

In the kneading step, it is preferable that the rubber composition of the present embodiment is masticated, and then at least a crosslinking agent is added and kneaded. The above additives may also be blended in addition to the crosslinking agent. Furthermore, in the kneading step, a solid rubber may be blended in addition to the rubber component contained in the rubber composition.

The method for producing a rubber compound is not particularly limited, but preferably includes a step of masticating the rubber composition of the present embodiment. By performing the mastication, the dispersibility of the crosslinking agent and the like to be blended thereafter is improved. The mastication may be performed by a conventional method, but may be performed by low-temperature kneading using a roll machine such as an open roll, or may be performed by high-temperature kneading using a Banbury mixer or the like. Among them, low-temperature kneading is preferably performed from the viewpoint of the dispersibility of the fine fibrous cellulose in the rubber composition. The temperature of low-temperature kneading is preferably 15°C or higher and 70°C or lower, more preferably 20°C or higher and 65°C or lower, and still more preferably 25°C or higher and 60°C or lower. The temperature of the high-temperature kneading is preferably 80°C or higher and 200°C or lower.

Furthermore, an additive such as a crosslinking agent is added to the masticated rubber composition and the resultant mixture is kneaded, thereby producing a rubber compound.

Kneading is a step of uniformly dispersing a crosslinking agent and other compounding agents in a rubber composition (preferably a masticated rubber composition). The kneading may be performed by a known method, and can be performed using, for example, a Banbury mixer, a kneader, an open roll, or the like. Examples of the crosslinking agent include sulfur and peroxides. Examples of other compounding agents include the above additives and a solid rubber.

[Crosslinked rubber and crosslinked rubber product]

The crosslinked rubber of the present embodiment is obtained by crosslinking a rubber compound containing a crosslinking agent. In addition, a crosslinked rubber product can be obtained by molding a rubber compound during crosslinking. That is, the crosslinked rubber product is formed by crosslinking and molding a rubber compound prepared from the rubber composition of the present embodiment.

The method for producing a crosslinked rubber product of the present invention may further include a step of molding the rubber compound obtained in the kneading step into an intended shape (molding step). The molding in this molding step can be performed by various molding methods using an extrusion molding machine, a calender roll, a press, an injection molding machine, a transfer molding machine, a hollow molding machine, a foam molding machine, or the like. It may be appropriately selected according to the shape of the final product, application, and molding method.

The kneading step and the molding step may be performed separately or continuously.

The temperature of crosslinking is not particularly limited as long as the crosslinking reaction proceeds. In general, an uncrosslinked rubber composition obtained by kneading is heated and crosslinked (also referred to as vulcanized in the case where the rubber composition contains sulfur) to obtain a crosslinked rubber composition. The heating temperature is preferably 140°C or higher, preferably 200°C or lower, and more preferably 180°C or lower. Therefore, the heating temperature is preferably about 140 to 200°C, more preferably about 140 to 180°C. For the crosslinking, a vulcanizing device that performs mold vulcanization, autoclave vulcanization, continuous vulcanization, or the like can be used.

[Applications]

The crosslinked rubber product of the present embodiment can be used for various applications, and is not particularly limited.

For example, the crosslinked rubber product of the present embodiment is suitably used for sealing materials, hoses, shoe soles (soles), tire members, vibration-proof rubbers, and the like. Among them, the crosslinked rubber product is preferably a tire.

Examples

The features of the present invention will be described more specifically below with reference to Examples and Comparative Examples. The materials, amounts to be used, ratios, contents of treatment, procedures of treatment, and the like described in the following Examples can be appropriately changed without departing from the gist of the present invention. Therefore, the scope of the present invention should not be interpreted as being limited by the specific examples described below.

<Production Example 1>

[Phosphorus oxo oxidation treatment]

As a raw material pulp, a softwood kraft pulp (solid content 93% by mass, basis weight 245 g/m$^2$, sheet form, Canadian standard freeness (CSF) measured in accordance with JIS P 8121-2:2012 after disintegration: 700 mL) manufactured by Oji Paper Co., Ltd. was used.

The raw material pulp was subjected to a phosphorus oxo oxidation treatment as follows. Firstly, a mixed aqueous solution of ammonium dihydrogen phosphate and urea was added to 100 parts by mass (absolute dry mass) of the above raw material pulp, the resultant mixture was adjusted so that the content of the ammonium dihydrogen phosphate was 45 parts by mass, the content of urea was 120 parts by mass, and the content of water was 150 parts by mass, and chemical solution-impregnated pulp was obtained. Next, the obtained chemical solution-impregnated pulp was heated in a hot-air dryer at 165°C for 250 seconds, thereby a phosphoric acid group was introduced into cellulose in the pulp, and phosphorylated pulp was obtained.

Next, the obtained phosphorylated pulp was subjected to a washing treatment. The washing treatment was performed by repeating an operation of stirring a pulp dispersion obtained by pouring 10 L of ion-exchanged water into 100 g (absolute dry mass) of the phosphorylated pulp such that the pulp was uniformly dispersed, and then filtering and dehydrating the pulp dispersion. Washing was terminated when an electric conductivity of the filtrate reached 100 μS/cm or less.

Next, the phosphorylated pulp after washing was subjected to a neutralization treatment as follows. Firstly, the phosphorylated pulp after washing was diluted with 10 L of ion-exchanged water, and then 1 N of a sodium hydroxide aqueous solution was added little by little while the mixture was stirred, and thereby, a phosphorylated pulp slurry with a pH

of 12 or higher and 13 or lower was obtained. Next, the phosphorylated pulp slurry was dehydrated and washed, and a neutralized phosphorylated pulp was obtained. The washing treatment after the neutralization treatment was performed in the same manner as the washing treatment for the phosphorylated pulp.

The obtained phosphorus-oxo-oxidized pulp was subjected to infrared absorption spectrum measurement using FT-IR. As a result, absorption based on P=O of a phosphoric acid group was observed in the vicinity of 1,230 $cm^{-1}$, which confirmed that the phosphoric acid group was added to the pulp. In addition, the obtained phosphorylated pulp was supplied to a test and was analyzed with an X-ray diffraction apparatus. As a result, typical peaks were confirmed at two positions in the vicinity of $2\theta$=14° or more and 17° or less, and in the vicinity of $2\theta$=22° or more and 23° or less, and it was confirmed that the phosphorylated pulp had a cellulose type I crystal structure. The amount of phosphoric acid groups (first dissociated acid amount, strongly acidic group amount) measured by the measurement method described in [Measurement of amount of phosphorus oxoacid groups] described later was 1.45 mmol/g. Note that the total dissociated acid amount was 2.45 mmol/g. The fiber width of the phosphorylated pulp was measured using a fiber length distribution measuring apparatus and found to be 30 μm.

<Production Example 2>

[Defibration treatment]

Ion-exchanged water was added to the phosphorylated pulp obtained in Production Example 1 to prepare a slurry having a solid content concentration of 2.2% by mass. This slurry was treated twice with a wet atomization device (STAR BURST manufactured by Sugino Machine Limited) at a pressure of 2,00 MPa to obtain a cellulose nanofiber dispersion containing a phosphorylated cellulose nanofiber. The fiber width of the phosphorylated cellulose nanofiber was measured using a transmission electron microscope and found to be 3 to 5 nm.

Note that the average fiber width of the fine fibrous cellulose was measured as follows using, for example, an electron microscope. First, an aqueous suspension of a fibrous cellulose having a concentration of 0.01% by mass or more and 0.1% by mass or less was prepared, and the suspension was cast onto a carbon membrane-coated grid subjected to a hydrophilization treatment to obtain a sample for TEM observation. When the fine fibrous cellulose includes a wide fiber, an SEM image on a surface of glass onto which the suspension has been cast may be observed. Next, observation with an electron microscope image is performed at a magnification of 1,000 times, 5,000 times, 10,000 times, or 50,000 times depending on the width of a fiber to be observed. Note that a sample, observation conditions, and magnification were adjusted so as to satisfy the following conditions.

(1) One straight line X is drawn at an arbitrary position in an observation image, and 20 or more and 100 or less fibers intersect the straight line X.
(2) A straight line Y perpendicularly intersecting the straight line X is drawn in the same image, and 20 or more and 100 or less fibers intersect the straight line Y.

For the observation image satisfying the above conditions, the width of a fiber intersecting the straight line X and the straight line Y was calculated in comparison with the scale bar set in the TEM image. In this way, at least three or more sets of observation images of surface portions not overlapping each other are obtained. Next, for each image, the width of a fiber intersecting the straight line X and the straight line Y is read. As a result, the fiber widths of at least 20 fibers $\times 2 \times 3$ = 120 fibers are read. Then, an average value of the read fiber widths was defined as an average fiber width of the fibrous cellulose.

The results of X-ray diffraction showed that the phosphorylated cellulose nanofiber maintained a cellulose type I crystal structure. The amount of phosphoric acid groups (first dissociated acid amount, strongly acidic group amount) measured by the measurement method described in [Measurement of amount of phosphorus oxoacid groups] described later was 1.45 mmol/g. Note that the total dissociated acid amount was 2.45 mmol/g.

<Example 1-1>

[Dilution step]

The cellulose nanofiber dispersion obtained in Production Example 2 was charged into a container so that the solid content of the cellulose nanofiber was 100 parts by mass, and then ion-exchanged water was charged into the container so that the solid content concentration of the cellulose nanofiber was diluted to 1.0% by mass. The fine fibrous cellulose dispersion in the container was stirred by a stirrer for 5 minutes at 1,000 rpm using a tornado stirrer (general-purpose high-speed stirrer, PM-202, manufactured by AS ONE Corporation) equipped with a stirring blade having a diameter of 6 inches.

[Mixing step]

To the obtained 1.0% by mass cellulose nanofiber dispersion, an aqueous dispersion of a natural rubber latex (ULACOL, manufactured by Regitex Co., Ltd., NR in Table 1) having a solid content concentration of 61% by mass was added so that the solid content of the rubber component was 500 parts by mass. The resultant mixture was stirred at 1,000 rpm for 5 minutes using a tornado stirrer equipped with a stirring blade having a diameter of 6 inches.

[Drying step]

Then, 50 mL of the obtained dispersion of the mixture of the cellulose nanofiber dispersion and the rubber latex was spread on a Teflon (registered trademark) coated vat having a bottom area of 540 $cm^2$. The vat in which the dispersion was spread was placed in an explosion-proof dryer, and the dispersion was dried at 40°C for 48 hours to obtain a sheet-shaped rubber composition. The obtained rubber composition had a thickness of 0.05 mm.

[Evaluation of rubber composition]

The rubber composition was evaluated by the methods described in [Measurement of water content], [Measurement of hardness], and [Piercing test]. The evaluation results are shown in Table 1.

<Example 2-1>

A sheet-shaped rubber composition was obtained in the same manner as in Example 1-1 except that 40 mL of the obtained dispersion of the mixture of the cellulose nanofiber dispersion and the rubber latex was spread on a vat and the drying time was 72 hours in [Drying step]. The obtained rubber composition had a thickness of 0.16 mm.

<Example 3-1>

A sheet-shaped rubber composition was obtained in the same manner as in Example 1-1 except that 40 mL of the obtained dispersion of the mixture of the cellulose nanofiber dispersion and the rubber latex was spread on a vat and the drying time was 40 hours in [Drying step]. The obtained rubber composition had a thickness of 0.04 mm.

<Example 4-1>

A sheet-shaped rubber composition was obtained in the same manner as in Example 1-1 except that 50 mL of the obtained dispersion of the mixture of the cellulose nanofiber dispersion and the rubber latex was spread on a vat and the drying time was 24 hours in [Drying step]. The obtained rubber composition had a thickness of 0.06 mm.

<Example 5-1>

In [Mixing step], an aqueous dispersion of a natural rubber latex (ULACOL, manufactured by Regitex Co., Ltd., NR in Table 1) having a solid content concentration of 61% by mass was added so that the solid content of the rubber component was 250 parts by mass.
In [Drying step], 135 mL of the obtained dispersion of the mixture of the cellulose nanofiber dispersion and the rubber latex was spread on a vat.
A sheet-shaped rubber composition was obtained in the same manner as in Example 1-1 except for the above. The obtained rubber composition had a thickness of 0.15 mm.

<Example 6-1>

In [Dilution step], the phosphorylated pulp obtained in Production Example 1 was charged into a container so that the solid content of the phosphorylated pulp was 25 parts by mass, the cellulose nanofiber dispersion obtained in Production Example 2 was further charged into the container so that the solid content of the cellulose nanofiber was 75 parts by mass, and ion-exchanged water was charged into the container so that the total solid content concentration of the phosphorylated pulp and the cellulose nanofiber was diluted to 1.0% by mass. The fibrous cellulose dispersion in the container was stirred by a stirrer for 5 minutes at 1,000 rpm using a tornado stirrer equipped with a stirring blade having a diameter of 6 inches.
In [Drying step], 280 mL of the obtained dispersion of the mixture of the cellulose nanofiber dispersion and the rubber latex was spread on a vat.

A sheet-shaped rubber composition was obtained in the same manner as in Example 1-1 except for the above. The obtained rubber composition had a thickness of 0.28 mm.

<Example 7-1>

In [Mixing step], instead of the natural rubber latex, an aqueous dispersion of hydrogenated nitrile rubber latex (Zetpol 2230LX, manufactured by Zeon Corporation, HNBR in Table 1) having a solid content concentration of 40.5% by mass was added so that the solid content of the rubber component was 500 parts by mass.
In [Drying step], 20 mL of the obtained dispersion of the mixture of the cellulose nanofiber dispersion and the rubber latex was spread on a vat.
A sheet-shaped rubber composition was obtained in the same manner as in Example 1-1 except for the above. The obtained rubber composition had a thickness of 0.02 mm.

<Example 8-1>

In [Mixing step], an aqueous dispersion of a natural rubber latex (ULACOL, manufactured by Regitex Co., Ltd., NR in Table 1) having a solid content concentration of 61% by mass was added so that the solid content of the rubber component was 2,000 parts by mass.
In [Drying step], 155 mL of the obtained mixed solution was spread on a vat having a bottom area of 540 $cm^2$.
A sheet-shaped rubber composition was obtained in the same manner as in Example 1-1 except for the above. The obtained rubber composition had a thickness of 0.51 mm.

<Example 9-1>

In [Mixing step], an aqueous dispersion of a natural rubber latex (ULACOL, manufactured by Regitex Co., Ltd., NR in Table 1) having a solid content concentration of 61% by mass was added so that the solid content of the rubber component was 3333 parts by mass.
In [Drying step], 110 mL of the obtained mixed solution was spread on a vat having a bottom area of 540 $cm^2$.
A sheet-shaped rubber composition was obtained in the same manner as in Example 1-1 except for the above. The obtained rubber composition had a thickness of 0.51 mm.

<Example 10-1>

In [Mixing step], instead of the natural rubber latex, an aqueous dispersion of a carboxylated nitrile rubber latex (Nipol LX551, manufactured by Zeon Corporation, XNBR in Table 1) having a solid content concentration of 45.0% by mass was added so that the solid content of the rubber component was 500 parts by mass.
In [Drying step], 20 mL of the obtained dispersion of the mixture of the cellulose nanofiber dispersion and the rubber latex was spread on a vat.
A sheet-shaped rubber composition was obtained in the same manner as in Example 1-1 except for the above. The obtained rubber composition had a thickness of 0.02 mm.

<Example 11-1>

In [Mixing step], instead of the natural rubber latex, an aqueous dispersion of a styrene-butadiene rubber latex (Nipol LX110, manufactured by Zeon Corporation, SBR in Table 1) having a solid content concentration of 40.5% by mass was added so that the solid content of the rubber component was 500 parts by mass.
In [Drying step], 10 mL of the obtained dispersion of the mixture of the cellulose nanofiber dispersion and the rubber latex was spread on a vat.
A sheet-shaped rubber composition was obtained in the same manner as in Example 1-1 except for the above. The obtained rubber composition had a thickness of 0.01 mm.

<Example 12-1>

In [Mixing step], an aqueous dispersion of a natural rubber latex (ULACOL, manufactured by Regitex Co., Ltd., NR in Table 1) having a solid content concentration of 61% by mass was added so that the solid content of the rubber component was 250 parts by mass, and an aqueous dispersion of a styrene-butadiene rubber latex (Nipol LX110, manufactured by Zeon Corporation, SBR in Table 1) having a solid content concentration of 54% by mass was added so that the solid content of the rubber component was 250 parts by mass.

In [Drying step], 80 mL of the obtained dispersion of the mixture of the cellulose nanofiber dispersion and the rubber latex was spread on a vat.
A sheet-shaped rubber composition was obtained in the same manner as in Example 1-1 except for the above. The obtained rubber composition had a thickness of 0.05 mm.

<Example 13-1>

In [Mixing step], an aqueous dispersion of a natural rubber latex (ULACOL, manufactured by Regitex Co., Ltd., NR in Table 1) having a solid content concentration of 61% by mass was added so that the solid content of the rubber component was 250 parts by mass, and an aqueous dispersion of a polybutadiene rubber latex (Nipol LX111A2, manufactured by Zeon Corporation, BR in Table 1) having a solid content concentration of 54% by mass was added so that the solid content of the rubber component was 250 parts by mass.
In [Drying step], 80 mL of the obtained dispersion of the mixture of the cellulose nanofiber dispersion and the rubber latex was spread on a vat.
A sheet-shaped rubber composition was obtained in the same manner as in Example 1-1 except for the above. The obtained rubber composition had a thickness of 0.05 mm.

<Comparative Example 1-1>

A sheet-shaped rubber composition was obtained in the same manner as in Example 1-1 except that 60 mL of the obtained dispersion of the mixture of the cellulose nanofiber dispersion and the rubber latex was spread on a vat and the drying time was 15 hours in [Drying step]. The obtained rubber composition had a thickness of 0.09 mm.

<Comparative Example 2-1>

In [Dilution step] and [Mixing step], the rotation speed of the stirring blade was set to 60 rpm.
In [Drying step], 40 mL of the obtained dispersion of the mixture of the cellulose nanofiber dispersion and the rubber latex was spread on a vat.
A sheet-shaped rubber composition was obtained in the same manner as in Example 1-1 except for the above. The obtained rubber composition had a thickness of 0.04 mm.

<Comparative Example 3-1>

In [Dilution step], instead of the cellulose nanofiber obtained in Production Example 2, the phosphorylated pulp obtained in Production Example 1 was added so that the solid content was 100 parts by mass.
In [Drying step], 150 mL of the obtained dispersion of the mixture of the cellulose nanofiber dispersion and the rubber latex was spread on a vat.
A sheet-shaped rubber composition was obtained in the same manner as in Example 1-1 except for the above. The obtained rubber composition had a thickness of 0.15 mm.

<Comparative Example 4-1>

In [Dilution step], ion-exchanged water was charged into the container so that the solid content concentration of the cellulose nanofiber was diluted to 1.3% by mass.
In [Mixing step], an aqueous dispersion of a natural rubber latex (ULACOL, manufactured by Regitex Co., Ltd., NR in Table 1) having a solid content concentration of 61% by mass was added to the obtained cellulose nanofiber dispersion so that the solid content of the rubber component was 167 parts by mass.
In [Drying step], 141 mL of the dispersion was spread on a Teflon-coated vat having a bottom area of 540 $cm^2$.
A sheet-shaped rubber composition was obtained in the same manner as in Example 1-1 except for the above. The obtained rubber composition had a thickness of 0.11 mm.

<Comparative Example 5-1>

In [Mixing step], an aqueous dispersion of a natural rubber latex (ULACOL, manufactured by Regitex Co., Ltd., NR in Table 1) having a solid content concentration of 61% by mass was added so that the solid content of the rubber component was 125 parts by mass.
In [Drying step], 300 mL of the obtained dispersion of the mixture of the cellulose nanofiber dispersion and the rubber latex was spread on a vat.

A sheet-shaped rubber composition was obtained in the same manner as in Example 1-1 except for the above. The obtained rubber composition had a thickness of 0.14 mm.

<Reference Example 1-1>

[Drying step]

5 mL of a natural rubber latex (ULACOL, manufactured by Regitex Co., Ltd., NR in Table 1) having a solid content concentration of 61% by mass was spread on a Teflon (registered trademark) coated vat having a bottom area of 540 $cm^2$. The vat in which the natural rubber latex was spread was placed in an explosion-proof dryer, and the latex was dried at 40°C for 48 hours to obtain a sheet-shaped rubber composition. The obtained rubber composition had a thickness of 0.04 mm.

<Reference Example 2-1>

A sheet-shaped rubber composition was obtained in the same manner as in Reference Example 1-1 except that 5 mL of an aqueous dispersion of a hydrogenated nitrile rubber latex (Zetpol 2230LX, manufactured by Zeon Corporation, HNBR in Table 1) having a solid content concentration of 40.5% by mass was used instead of the natural rubber latex having a solid content concentration of 61% by mass. The obtained rubber composition had a thickness of 0.04 mm.

<Reference Example 3-1>

A sheet-shaped rubber composition was obtained in the same manner as in Reference Example 1-1 except that 5 mL of an aqueous dispersion of a carboxylated nitrile rubber latex (Nipol LX551, manufactured by Zeon Corporation, XNBR in Table 1) having a solid content concentration of 45.0% by mass was used instead of the natural rubber latex having a solid content concentration of 61% by mass. The obtained rubber composition had a thickness of 0.04 mm.

<Reference Example 4-1>

A sheet-shaped rubber composition was obtained in the same manner as in Reference Example 1-1 except that 5 mL of an aqueous dispersion of a styrene-butadiene rubber latex (Nipol LX110, manufactured by Zeon Corporation, SBR in Table 1) having a solid content concentration of 40.5% by mass was used instead of the natural rubber latex having a solid content concentration of 61% by mass. The obtained rubber composition had a thickness of 0.04 mm.

<Reference Example 5-1>

A sheet-shaped rubber composition was obtained in the same manner as in Reference Example 1-1 except that 25 mL of an aqueous dispersion of a natural rubber latex (ULACOL, manufactured by Regitex Co., Ltd., NR in Table 1) having a solid content concentration of 61% by mass and 25 mL of an aqueous dispersion of a styrene-butadiene rubber latex (Nipol LX110, manufactured by Zeon Corporation, SBR in Table 1) having a solid content concentration of 40.5% by mass were mixed and used. The obtained rubber composition had a thickness of 0.04 mm.

<Reference Example 6-1>

A sheet-shaped rubber composition was obtained in the same manner as in Reference Example 1-1 except that 3 mL of an aqueous dispersion of a natural rubber latex (ULACOL, manufactured by Regitex Co., Ltd., NR in Table 1) having a solid content concentration of 61% by mass and 5 mL of an aqueous dispersion of a polybutadiene rubber latex (Nipol LX111A2, manufactured by Zeon Corporation, BR in Table 1) having a solid content concentration of 54% by mass were mixed and used. The obtained rubber composition had a thickness of 0.04 mm.

<Example 1-2>

[Preparation of rubber compound]

The rubber composition obtained in Example 1-1 was masticated using an open roll (6-inch double roll mill, manufactured by DAIHAN CORPORATION) at a rotation speed of 26/30 rpm without heating until the rubber composition was wound around the roll. At this time, the time taken until the rubber composition was wound around the roll was 10 minutes. Then, using an open roll, 2 parts by mass of a crosslinking agent A (PERCUMYL D, manufactured by NOF Corporation), 3 parts by mass of zinc oxide A (Zinc Oxide II, manufactured by Seido Chemical Industry Co., Ltd.), 1.5 parts

by mass of an antiaging agent A (ANTAGE MB, manufactured by Kawaguchi Chemical Industry Co., Ltd.), and 1.5 parts by mass of an antiaging agent B (ANTAGE RD, manufactured by Kawaguchi Chemical Industry Co., Ltd.) were added to 100 parts by mass of the rubber component, and the mixture was kneaded for 6 minutes to obtain a rubber compound having a thickness of 2 mm.

[Crosslinking step]

The obtained rubber compound was placed in a mold, and press-heated at 165°C for 20 minutes to prepare a sheet of a crosslinked rubber composition having a thickness of 2 mm.

[Evaluation of crosslinked rubber composition]

The sheet of the crosslinked rubber composition prepared by the above method was evaluated by the methods described in [Measurement of hardness] and [Tensile test]. The evaluation results are shown in Table 2.

<Example 2-2>

A sheet of a crosslinked rubber composition was obtained using the rubber composition obtained in Example 2-1 in the same manner as in Example 1-2.

<Example 3-2>

A sheet of a crosslinked rubber composition was obtained using the rubber composition obtained in Example 3-1 in the same manner as in Example 1-2.

<Example 4-2>

A sheet of a crosslinked rubber composition was obtained using the rubber composition obtained in Example 4-1 in the same manner as in Example 1-2 except that the time taken until the rubber composition was wound around the roll was 30 minutes.

<Example 5-2>

A sheet of a crosslinked rubber composition was obtained using the rubber composition obtained in Example 5-1 in the same manner as in Example 1-2.

<Example 6-2>

A sheet of a crosslinked rubber composition was obtained using the rubber composition obtained in Example 6-1 in the same manner as in Example 1-2.

<Example 7-2>

[Preparation of rubber compound]

The rubber composition obtained in Example 7-1 was masticated in the same manner as in Example 1-2 using an open roll without heating at a rotation speed of 26/30 rpm until the rubber composition was wound around the roll. At this time, the time taken until the rubber composition was wound around the roll was 20 minutes. Then, 3.2 parts by mass of the crosslinking agent A, 3 parts by mass of zinc oxide A, 1.5 parts by mass of the antiaging agent A, and 1.5 parts by mass of the antiaging agent B were added to 100 parts by mass of the rubber component, and the mixture was kneaded for 10 minutes to obtain a rubber compound having a thickness of 2 mm.

[Crosslinking step]

The obtained rubber compound was placed in a mold, and press-heated at 165°C for 30 minutes to prepare a sheet of a crosslinked rubber composition having a thickness of 2 mm.

<Example 8-2>

A sheet of a crosslinked rubber composition was obtained using the rubber composition obtained in Example 8-1

in the same manner as in Example 1-2.

<Example 9-2>

A sheet of a crosslinked rubber composition was obtained using the rubber composition obtained in Example 9-1 in the same manner as in Example 1-2.

<Example 10-2>

A sheet of a crosslinked rubber composition was obtained using the rubber composition obtained in Example 10-1 in the same manner as in Example 1-2.

<Example 11-2>

[Preparation of rubber compound]

The rubber composition obtained in Example 11-1 was masticated in the same manner as in Example 1-2 using an open roll without heating at a rotation speed of 26/30 rpm until the rubber composition was wound around the roll. At this time, the time taken until the rubber composition was wound around the roll was 10 minutes. Then, 1.5 parts by mass of a crosslinking agent B (insoluble sulfur, MUCRON OT-20, manufactured by Shikoku Chemicals Corporation), 2 parts by mass of a vulcanization accelerator A (NOCCELER MSA-G, manufactured by Ouchi Shinko Chemical Industrial Co., Ltd.), 2 parts by mass of zinc oxide A, 2 parts by mass of a vulcanization promotion aid B (stearic acid 50S, manufactured by New Japan Chemical Co., Ltd.), and 2 parts by mass of an antiaging agent B were added to 100 parts by mass of the rubber component, and the mixture was kneaded for 10 minutes to obtain a rubber compound having a thickness of 2 mm.

[Crosslinking step]

The obtained rubber compound was placed in a mold, and press-heated at 150°C for 40 minutes to prepare a sheet of a crosslinked rubber composition having a thickness of 2 mm.

<Example 12-2>

[Preparation of rubber compound]

The rubber composition obtained in Example 1-1 was masticated in the same manner as in Example 1-2 using an open roll without heating at a rotation speed of 26/30 rpm until the rubber composition was wound around the roll. At this time, the time taken until the rubber composition was wound around the roll was 10 minutes. Then, 24 parts by mass of the rubber composition, 80 parts by mass of solid natural rubber (RSS#3, manufactured by Koshigaya Rubber Industry Co., Ltd., NR in Table 2), 48 parts by mass of carbon black (HAF, manufactured by Tokai Carbon Co., Ltd.), 1.5 parts by mass of the crosslinking agent B, 2 parts by mass of zinc oxide A, 2 parts by mass of the vulcanization promotion aid A, 2 parts by mass of the vulcanization promotion aid B, and 2 parts by mass of the antiaging agent B were added, and the mixture was kneaded to obtain a rubber compound having a thickness of 2 mm.

[Crosslinking step]

A sheet of a crosslinked rubber composition having a thickness of 2 mm was prepared by performing the crosslinking step in the same manner as in Example 11-2.

<Example 13-2>

[Preparation of rubber compound]

The rubber composition obtained in Example 12-1 was masticated using an open roll without heating at a rotation speed of 26/30 rpm until the rubber composition was wound around the roll. At this time, the time taken until the rubber composition was wound around the roll was 10 minutes. Then, 40 parts by mass of carbon black, 1.5 parts by mass of the crosslinking agent B, 2 parts by mass of zinc oxide, 2 parts by mass of the vulcanization promotion aid A, 2 parts by mass of the vulcanization promotion aid B, and 2 parts by mass of the antiaging agent B were added to 100 parts by mass of the rubber component, and the mixture was kneaded to obtain a rubber compound having a thickness of 2 mm.

[Crosslinking step]

A sheet of a crosslinked rubber composition having a thickness of 2 mm was prepared by performing the crosslinking step in the same manner as in Example 11-2.

<Example 14-2>

A sheet of a crosslinked rubber composition was obtained using the rubber composition obtained in Example 13-1 in the same manner as in Example 13-2.

<Example 15-2>

[Preparation of rubber compound]

The rubber composition obtained in Example 1-1 was masticated using an open roll without heating at a rotation speed of 26/30 rpm until the rubber composition was wound around the roll. At this time, the time taken until the rubber composition was wound around the roll was 10 minutes. Then, 60 parts by mass of the rubber composition, 50 parts by mass of solid emulsion polymerized styrene-butadiene rubber (Nipol 1502, manufactured by Zeon Corporation, ESBR in Table 2), 30 parts by mass of carbon black, 1.5 parts by mass of the crosslinking agent B, 2 parts by mass of zinc oxide, 2 parts by mass of the vulcanization promotion aid A, 2 parts by mass of the vulcanization promotion aid B, and 2 parts by mass of the antiaging agent B were added, and the mixture was kneaded to obtain a rubber compound having a thickness of 2 mm.

[Crosslinking step]

A sheet of a crosslinked rubber composition having a thickness of 2 mm was prepared by performing the crosslinking step in the same manner as in Example 11-2.

<Example 16-2>

A rubber compound having a thickness of 2 mm was obtained in the same manner as in Example 15-2 except that 50 parts by mass of solid solution polymerized styrene-butadiene rubber (SL552, manufactured by JSR Corporation, SSBR in Table 2) was added instead of the solid emulsion polymerized styrene-butadiene rubber in [Preparation of rubber compound].

<Example 17-2>

A rubber compound having a thickness of 2 mm was obtained in the same manner as in Example 15-2 except that 50 parts by mass of solid butadiene rubber (BR 150B, manufactured by UBE Corporation, BR in Table 2) was added instead of the solid emulsion polymerized styrene-butadiene rubber in [Preparation of rubber compound].

<Example 18-2>

[Preparation of rubber compound]

The rubber composition obtained in Example 1-1 was masticated in the same manner as in Example 1-2 using an open roll without heating at a rotation speed of 26/30 rpm until the rubber composition was wound around the roll. Then, using an open roll, 40 parts by mass of silica powder (Nipsil VN3, manufactured by Tosoh Silica Corporation), 2 parts by mass of a silane coupling agent (Si69, manufactured by Evonik Degussa GmbH), 2 parts by mass of the crosslinking agent A, 3 parts by mass of zinc oxide, 1.5 parts by mass of the antiaging agent A, and 1.5 parts by mass of the antiaging agent B were added to 100 parts by mass of the rubber component, and the mixture was kneaded for 10 minutes to obtain a rubber compound having a thickness of about 2 mm or more.

[Crosslinking step]

A sheet of a crosslinked rubber composition having a thickness of 2 mm was prepared by performing the crosslinking step in the same manner as in Example 1-2.

<Example 19-2>

[Preparation of rubber compound]

The rubber composition obtained in Example 1-1 was masticated in the same manner as in Example 1-2 using an open roll without heating at a rotation speed of 26/30 rpm until the rubber composition was wound around the roll. Then, 60 parts by mass of the rubber composition, 50 parts by mass of solid natural rubber (NR in Table 2), 40 parts by mass of silica, 2 parts by mass of the silane coupling agent, 2 parts by mass of the crosslinking agent A, 3 parts by mass of zinc oxide, 1.5 parts by mass of the antiaging agent A, and 1.5 parts by mass of the antiaging agent B were added, and the mixture was kneaded for 10 minutes to obtain a rubber compound having a thickness of about 2 mm or more.

[Crosslinking step]

A sheet of a crosslinked rubber composition having a thickness of 2 mm was prepared by performing [Crosslinking step] in the same manner as in Example 1-2.

<Example 20-2>

[Preparation of rubber compound]

The rubber composition obtained in Example 1-1 was masticated in the same manner as in Example 1-2 using an open roll without heating at a rotation speed of 26/30 rpm until the rubber composition was wound around the roll. Then, 30 parts by mass of the rubber composition, 75 parts by mass of solid natural rubber (NR in Table 2), 40 parts by mass of silica, 2 parts by mass of the silane coupling agent, 2 parts by mass of the crosslinking agent A, 3 parts by mass of zinc oxide, 1.5 parts by mass of the antiaging agent A, and 1.5 parts by mass of the antiaging agent B were added, and the mixture was kneaded for 10 minutes to obtain a rubber compound having a thickness of about 2 mm or more.

[Crosslinking step]

A sheet of a crosslinked rubber composition having a thickness of 2 mm was prepared by performing the crosslinking step in the same manner as in Example 1-2.

<Comparative Example 1-2>

The rubber composition obtained in Comparative Example 1-1 was not wound around the roll even after being kneaded for 30 minutes or more in [Preparation of rubber compound]. The addition of reagents to the rubber composition and the crosslinking step were not performed.

<Comparative Example 2-2>

A sheet of a crosslinked rubber composition was obtained using the rubber composition obtained in Comparative Example 2-1 in the same manner as in Example 1-2.

<Comparative Example 3-2>

A sheet of a crosslinked rubber composition was obtained using the rubber composition obtained in Comparative Example 3-1 in the same manner as in Example 1-2.

<Comparative Example 4-2>

[Preparation of rubber compound]

Solid natural rubber (NR in Table 2) was masticated using an open roll without heating at a rotation speed of 26/30 rpm until the rubber was wound around the roll. At this time, the time taken until the rubber is wound around the roll was 10 minutes. Then, using an open roll, 100 parts by mass of the solid natural rubber, 60 parts by mass of carbon black, 1.5 parts by mass of the crosslinking agent B, 2 parts by mass of zinc oxide, 2 parts by mass of the vulcanization promotion aid A, 2 parts by mass of the vulcanization promotion aid B, and 2 parts by mass of the antiaging agent B were added, and the mixture was kneaded to obtain a rubber compound having a thickness of 2 mm.

[Crosslinking step]

A sheet of a crosslinked rubber composition having a thickness of 2 mm was prepared by performing the crosslinking step in the same manner as in Example 11-2.

<Comparative Example 5-2>

[Preparation of rubber compound]

First, 50 parts by mass of solid natural rubber (NR in Table 2), 50 parts by mass of solid emulsion polymerized styrene-butadiene rubber (ESBR in Table 2), 50 parts by mass of carbon black, 1.5 parts by mass of the crosslinking agent B, 2 parts by mass of zinc oxide, 2 parts by mass of the vulcanization promotion aid A, 2 parts by mass of the vulcanization promotion aid B, and 2 parts by mass of the antiaging agent B were added, and the mixture was kneaded using an open roll without heating at a rotation speed of 26/30 rpm to obtain a rubber compound having a thickness of 2 mm.

[Crosslinking step]

A sheet of a crosslinked rubber composition having a thickness of 2 mm was prepared by performing the crosslinking step in the same manner as in Example 11-2.

<Comparative Example 6-2>

A rubber compound having a thickness of 2 mm was obtained in the same manner as in Comparative Example 5-2 except that 50 parts by mass of solid solution polymerized styrene-butadiene rubber (SSBR in Table 2) was added instead of the solid emulsion polymerized styrene-butadiene rubber in [Preparation of rubber compound].

<Comparative Example 7-2>

A rubber compound having a thickness of 2 mm was obtained in the same manner as in Comparative Example 5-2 except that 50 parts by mass of solid butadiene rubber (BR in Table 2) was added instead of the solid emulsion polymerized styrene-butadiene rubber in [Preparation of rubber compound].

<Comparative Example 8-2>

[Preparation of rubber compound]

First, 100 parts by mass of solid natural rubber (NR in Table 2), 40 parts by mass of silica, 2 parts by mass of the silane coupling agent, 2 parts by mass of the crosslinking agent A, 3 parts by mass of zinc oxide, 1.5 parts by mass of the antiaging agent A, and 1.5 parts by mass of the antiaging agent B were added, and the mixture was kneaded using an open roll without heating at a rotation speed of 26/30 rpm to obtain a rubber compound having a thickness of about 2 mm or more.

[Crosslinking step]

A sheet of a crosslinked rubber composition having a thickness of 2 mm was prepared by performing the crosslinking step in the same manner as in Example 1-2.

<Reference Example 1-2>

A sheet of a crosslinked rubber composition was obtained using the rubber composition obtained in Reference Example 1-1 in the same manner as in Example 1-2.

<Reference Example 2-2>

A sheet of a crosslinked rubber composition was obtained using the rubber composition obtained in Reference Example 2-1 in the same manner as in Example 7-2.

<Reference Example 3-2>

A sheet of a crosslinked rubber composition was obtained using the rubber composition obtained in Reference Example 3-1 in the same manner as in Example 1-2.

<Reference Example 4-2>

A sheet of a crosslinked rubber composition was obtained using the rubber composition obtained in Reference Example 4-1 in the same manner as in Example 11-2.

<Reference Example 5-2>

A sheet of a crosslinked rubber composition was obtained using the rubber composition obtained in Reference Example 5-1 in the same manner as in Example 11-2.

<Reference Example 6-2>

A sheet of a crosslinked rubber composition was obtained using the rubber composition obtained in Reference Example 6-1 in the same manner as in Example 11-2.

[Evaluation]

The dispersions, rubber compositions, and crosslinked rubber compositions obtained in the above Examples and Comparative Examples were evaluated by the following methods.

[Measurement of amount of phosphorus oxoacid groups]

In the measurement of the amount of phosphorus oxoacid groups (the amount of phosphoric acid groups or the amount of phosphorous acid groups) in the fibrous cellulose, first, ion-exchanged water was added to the target fine fibrous cellulose to prepare a slurry having a solid content concentration of 0.2% by mass. The obtained fibrous cellulose dispersion was subjected to a treatment with an ion exchange resin, and then titrated with an alkali to measure the amount of phosphorus oxoacid groups.

The treatment with an ion exchange resin was performed by adding a strongly acidic ion exchange resin (Amberjet 1024, manufactured by ORGANO CORPORATION, conditioned) having a volume of 1/10 to the fibrous cellulose dispersion, shaking the mixture for one hour, then pouring the resultant mixture onto a mesh having an opening of 90 μm, and separating the resin and the slurry.

The titration using an alkali was performed by measuring a change in a pH value indicated by the slurry while adding 10 μL of a 0.1 N sodium hydroxide aqueous solution to the slurry containing a fibrous cellulose after the treatment with the ion exchange resin every five seconds. Titration was performed while nitrogen gas was blown into the slurry from 15 minutes before the start of titration. In this neutralization titration, two points at which the increment (differential value of a pH with respect to the amount of the alkali added dropwise) is maximum are observed in the curve obtained by plotting a measured pH with respect to the amount of the alkali added. Out of these points, a maximum point of the increment obtained first after addition of the alkali is referred to as a first end point, and a maximum point of the increment obtained next is referred to as a second end point (Fig. 4). The alkali amount required from the start of titration to the first end point is equal to the first dissociated acid amount in the slurry used for titration. Also, the alkali amount required from the start of titration to the second end point is equal to the total dissociated acid amount in the slurry used for titration. Note that a value obtained by dividing the alkali amount (mmol) required from the start of titration to the first end point by the solid content (g) in the slurry to be titrated was defined as the amount of phosphorus oxoacid groups (first dissociated acid amount) (mmol/g). In addition, a value obtained by dividing the alkali amount (mmol) required from the start of titration to the second end point by the solid content (g) in the slurry to be titrated was defined as the total dissociated acid amount (mmol/g).

[Measurement of water content]

First, the rubber composition was put on a tare such as an aluminum cup, the mass of the rubber composition was measured, and the rubber composition was then subjected to a dryer. After a lapse of 3 hours or more, the rubber composition was collected and allowed to stand in a desiccator for 30 seconds, and then the mass of the rubber composition was measured. The water content was calculated from the measurement results according to the following formula.

$$\text{Water content (\%)} = (A - B)/A \times 100$$

(Here, A is a mass before drying, and B is a mass after drying.).

[Measurement of hardness]

The rubber composition and the crosslinked rubber composition were evaluated according to JIS K 6253-3:2012. Three sheets of the crosslinked rubber composition each having a thickness of 2 mm were stacked, and the thickness of the stack was measured as 6 mm. A type A durometer was selected, and the measurement was performed by pressing a needle of the durometer against the test piece.

For the hardness of the crosslinked rubber composition, a relative value (A/B) was calculated by comparing a measurement result with a measurement result of Reference Examples which use a pure rubber blend of the same rubber component (here, A denotes a measured value of Examples and Comparative Examples, and B denotes a measured value of Reference Examples.).

[Piercing test]

The rubber composition was measured in accordance with JIS Z 1707:2019. As the test piece, a sheet-shaped rubber composition was used.

The sheet-shaped rubber composition was fixed with a jig and pierced with a needle at 20 mm/min, and the maximum stress (N) and the elongation at penetration (mm) until the needle penetrated the sheet-shaped rubber composition were measured. Next, each of the maximum stress (N) and the elongation at penetration (mm) until the needle penetrated the sheet-shaped rubber composition was divided by the thickness of the sheet.

[Tensile test]

Each sheet-shaped crosslinked rubber composition was punched out into a dumbbell (dumbbell No. 6) described in JIS K 6251:2017. The dumbbell-shaped test piece was subjected to a tensile test at 23±2°C, a gauge length of 25 mm, and a tensile speed of 500 mm/min according to JIS K 6251:2017 using a tensile tester (TENSILON RTG-1310, from A&D) to measure 100% modulus ($\sigma$100 (MPa)), tensile strength (MPa), elongation at break (%), and fracture energy (J). Next, for each of the 100% modulus ($\sigma$100 (MPa)), the tensile strength (MPa), the elongation at break (%), and the fracture energy (J), a relative value (A/B) was calculated by comparing a measurement result with a measurement result of Reference Example which uses a pure rubber blended of the same rubber component (here, A denotes a measured value of Examples and Comparative Examples, and B denotes a measured value of Reference Examples.) .

Table 1-1

| | | | Examples | | | | | | | | | | | | |
|---|---|---|---|---|---|---|---|---|---|---|---|---|---|---|---|
| | | | 1-1 | 2-1 | 3-1 | 4-1 | 5-1 | 6-1 | 7-1 | 8-1 | 9-1 | 10-1 | 11-1 | 12-1 | 13-1 |
| Formulation | Rubber component | NR | 100 | 100 | 100 | 100 | 100 | 100 | - | 100 | 100 | - | - | 50 | 50 |
| | | HNBR | - | - | - | - | - | - | 100 | - | - | - | - | - | - |
| | | XNBR | - | - | - | - | - | - | - | - | - | 100 | - | - | - |
| | | SBR | - | - | - | - | - | - | - | - | - | - | 100 | 50 | - |
| | | BR | - | - | - | - | - | - | - | - | - | - | - | - | 50 |
| | Fine fibrous cellulose | | 20 | 20 | 20 | 20 | 40 | 15 | 20 | 5 | 3 | 20 | 20 | 20 | 20 |
| | Phosphorylated pulp | | - | - | - | - | - | 5 | - | - | - | - | - | - | - |
| Dilution and mixing step | Rotation speed (rpm) | | 1000 | 1000 | 1000 | 1000 | 1000 | 1000 | 1000 | 1000 | 1000 | 1000 | 1000 | 1000 | 1000 |
| Drying step | Drying time (h) | | 48 | 72 | 40 | 24 | 48 | 48 | 48 | 48 | 48 | 48 | 48 | 48 | 48 |
| Rubber composition evaluation | Water content (%) | | 1.8 | 0.3 | 4.7 | 14.8 | 5.2 | 3.2 | 3.0 | 1.9 | 2.0 | 1.8 | 2.1 | 2.0 | 2.1 |
| | Hardness | | 63 | 64 | 71 | 65 | 77 | 69 | 65 | 51 | 50 | 76 | 75 | 61 | 65 |
| | Thickness (mm) | | 0.05 | 0.16 | 0.04 | 0.06 | 0.15 | 0.28 | 0.02 | 0.51 | 0.51 | 0.02 | 0.01 | 0.05 | 0.05 |
| | Piercing strength (N)/thickness (mm) | | 8 | 5 | 9 | 5 | 13 | 7 | 32 | 9 | 15 | 27 | 15 | 4 | 4 |
| | Piercing elongation (mm)/thickness (mm) | | 90 | 37 | 95 | 56 | 13 | 9 | 165 | 13 | 45 | 162 | 122 | 60 | 45 |

Table 1-2

| | | | Comparative Examples | | | | | Reference Examples | | | | | |
|---|---|---|---|---|---|---|---|---|---|---|---|---|---|
| | | | 1-1 | 2-1 | 3-1 | 4-1 | 5-1 | 1-1 | 2-1 | 3-1 | 4-1 | 5-1 | 6-1 |
| Formulation | Rubber component | NR | 100 | 100 | 100 | 100 | 100 | 100 | - | - | - | 50 | 50 |
| | | HNBR | - | - | - | - | - | - | 100 | - | - | - | - |
| | | XNBR | - | - | - | - | - | - | - | 100 | - | - | - |
| | | SBR | - | - | - | - | - | - | - | - | 100 | 50 | - |
| | | BR | - | - | - | - | - | - | - | - | - | - | 50 |
| | Fine fibrous cellulose | | 20 | 20 | - | 60 | 80 | - | - | - | - | - | - |
| | Phosphorylated pulp | | - | - | 20 | - | - | - | - | - | - | - | - |
| Dilution and mixing step | Rotation speed (rpm) | | 1000 | 60 | 1000 | 1000 | 1000 | - | - | - | - | 1000 | 1000 |
| Drying step | Drying time (h) | | 15 | 48 | 48 | 48 | 48 | 48 | 48 | 48 | 48 | 48 | 48 |
| Rubber composition evaluation | Water content (%) | | 30.9 | 0.1 | 3.0 | 95.9 | 5.4 | 1.4 | 2.4 | 3.1 | 0.2 | 0.8 | 1.2 |
| | Hardness | | 55 | 61 | 82 | 78 | 82 | 43 | 61 | 37 | 25 | 30 | 34 |
| | Thickness (mm) | | 0.09 | 0.04 | 0.15 | 0.11 | 0.14 | 0.04 | 0.04 | 0.04 | 0.04 | 0.04 | 0.04 |
| | Piercing strength (N)/thickness (mm) | | 2 | 2 | 7 | 1 | 1 | 30< | 30< | 30< | 12 | 30< | 30< |
| | Piercing elongation (mm)/thickness (mm) | | 74 | 64 | 51 | 13 | 8 | 450< | 450< | 450< | 175 | 306 | 450< |

Table 2-1

| | | | Examples | | | | | | | | | | | | | | | | | | | |
|---|---|---|---|---|---|---|---|---|---|---|---|---|---|---|---|---|---|---|---|---|---|---|
| | | | 1-2 | 2-2 | 3-2 | 4-2 | 5-2 | 6-2 | 7-2 | 8-2 | 9-2 | 10-2 | 11-2 | 12-2 | 13-2 | 14-2 | 15-2 | 16-2 | 17-2 | 18-2 | 19-2 | 20-2 |
| Formulation | Rubber composition | Rubber component | 100 | 100 | 100 | 100 | 100 | 100 | 100 | 100 | 100 | 100 | 100 | 100 | 100 | 100 | 50 | 50 | 50 | 100 | 50 | 25 |
| | | Cellulose component | 20 | 20 | 20 | 20 | 40 | 20 | 20 | 5 | 5 | 20 | 20 | 20 | 20 | 20 | 10 | 10 | 10 | 20 | 10 | 5 |
| | Solid rubber | NR | - | - | - | - | - | - | - | - | - | - | - | 400 | - | - | - | - | - | - | 50 | 75 |
| | | ESBR | - | - | - | - | - | - | - | - | - | - | - | - | - | - | 50 | - | - | - | - | - |
| | | SSBR | - | - | - | - | - | - | - | - | - | - | - | - | - | - | - | 50 | - | - | - | - |
| | | BR | - | - | - | - | - | - | - | - | - | - | - | - | - | - | - | - | 50 | - | - | - |
| | PERCUMYL D | | 2 | 2 | 2 | 2 | 2 | 2 | 3.2 | 2 | 2 | 2 | - | - | - | - | - | - | - | 2 | 2 | 2 |
| | Sulfur | | - | - | - | - | - | - | - | - | - | - | 1.5 | 7.5 | 1.5 | 1.5 | 1.5 | 1.5 | 1.5 | - | - | - |
| | NOCCELER MSA-G | | - | - | - | - | - | - | - | - | - | - | 2 | 10 | 2 | 2 | 2 | 2 | 2 | - | - | - |
| | Zinc oxide | | 3 | 3 | 3 | 3 | 3 | 3 | 3 | 3 | 3 | 3 | 2 | 10 | 2 | 2 | 2 | 2 | 2 | 3 | 3 | 3 |
| | Stearic acid | | - | - | - | - | - | - | - | - | - | - | 2 | 10 | 2 | 2 | 2 | 2 | 2 | - | - | - |
| | Carbon black | | - | - | - | - | - | - | - | - | - | - | - | 240 | 40 | 40 | 30 | 30 | 30 | - | - | - |
| | Silica | | - | - | - | - | - | - | - | - | - | - | - | - | - | - | - | - | - | 40 | 40 | 40 |
| | Silane coupling agent | | - | - | - | - | - | - | - | - | - | - | - | - | - | - | - | - | - | 2 | 2 | 2 |
| | ANTAGE MB | | 1.5 | 1.5 | 1.5 | 1.5 | 1.5 | 1.5 | 1.5 | 1.5 | 1.5 | 1.5 | - | - | - | - | - | - | - | 1.5 | 1.5 | 1.5 |
| | ANTAGE RD | | 1.5 | 1.5 | 1.5 | 1.5 | 1.5 | 1.5 | 1.5 | 1.5 | 1.5 | 1.5 | 2.0 | 10.0 | 2.0 | 2.0 | 2.0 | 2.0 | 2.0 | 1.5 | 1.5 | 1.5 |
| Kneadability | Time taken until rubber composition is wound around roll (min) | | 10 | 10 | 10 | 30 | 10 | 10 | 20 | 10 | 10 | 10 | 10 | 10 | 10 | 10 | 10 | 10 | 10 | 10 | 10 | 10 |
| Evaluation of crosslinked rubber product | Hardness (relative value) | | 1.5 | 1.4 | 1.5 | 1.3 | 1.7 | 1.5 | 1.3 | 1.3 | 1.2 | 1.4 | 1.4 | 1.4 | 1.3 | 1.6 | 1.3 | 1.3 | 1.6 | 1.5 | 1.3 | 1.3 |
| | Tensile strength (relative value) | | 3.8 | 3.9 | 3.5 | 2.3 | 3.1 | 1.7 | 1.7 | 1.9 | 1.6 | 2.4 | 5.2 | 4.8 | 3.3 | 1.4 | 4.5 | 3.8 | 2.3 | 3.3 | 4.0 | 4.5 |
| | Elongation at break (relative value) | | 0.8 | 0.8 | 0.9 | 1.0 | 0.3 | 0.5 | 0.6 | 1.0 | 1.0 | 0.6 | 1.2 | 0.8 | 0.9 | 0.4 | 1.0 | 0.9 | 0.4 | 0.7 | 0.9 | 1.0 |
| | σ100 (relative value) | | 7.0 | 6.9 | 5.4 | 2.5 | 15.7 | 6.6 | 8.9 | 1.9 | 1.5 | 10.2 | 5.8 | 5.6 | 5.1 | 8.2 | 5.6 | 6.1 | 7.9 | 6.7 | 4.1 | 2.8 |
| | Fracture energy (relative value) | | 3.9 | 3.9 | 3.8 | 2.6 | 1.7 | 1.4 | 2.1 | 2.1 | 1.7 | 2.3 | 7.6 | 5.2 | 3.5 | 0.9 | 5.3 | 4.0 | 1.3 | 3.0 | 3.9 | 4.9 |

Table 2-2

| | | | Comparative Examples | | | | | | | | Reference Examples | | | | | |
|---|---|---|---|---|---|---|---|---|---|---|---|---|---|---|---|---|
| | | | 1-2 | 2-2 | 3-2 | 4-2 | 5-2 | 6-2 | 7-2 | 8-2 | 1-2 | 2-2 | 3-2 | 4-2 | 5-2 | 6-2 |
| Formulation | Rubber composition | Rubber component | 100 | 100 | 100 | - | - | - | - | - | 100 | 100 | 100 | 100 | 100 | 100 |
| | | Cellulose component | 20 | 20 | 20 | - | - | - | - | - | - | - | - | - | - | - |
| | Solid rubber | NR | - | - | - | 100 | 50 | 50 | 50 | 100 | - | - | - | - | - | - |
| | | ESBR | - | - | - | - | 50 | - | - | - | - | - | - | - | - | - |
| | | SSBR | - | - | - | - | - | 50 | - | - | - | - | - | - | - | - |
| | | BR | - | - | - | - | - | - | 50 | - | - | - | - | - | - | - |
| | PERCUMYL D | | 2 | 2 | 2 | - | - | - | - | 2 | 2 | 3.2 | 2 | - | - | - |
| | Sulfur | | - | - | - | 2 | 2 | 2 | 2 | - | - | - | - | 1.5 | 1.5 | 1.5 |
| | NOCCELER MSA-G | | - | - | - | 2 | 2 | 2 | 2 | - | - | - | - | 2 | 2 | 2 |
| | Zinc oxide | | 3 | 3 | 3 | 2 | 2 | 2 | 2 | 3 | 3 | 3 | 3 | 2 | 2 | 2 |
| | Stearic acid | | - | - | - | 2 | 2 | 2 | 2 | - | - | - | - | 2 | 2 | 2 |
| | Carbon black | | - | - | - | 60 | 50 | 50 | 50 | - | - | - | - | - | - | - |
| | Silica | | - | - | - | - | - | - | - | 40 | - | - | - | - | - | - |
| | Silane coupling agent | | - | - | - | - | - | - | - | 2 | - | - | - | - | - | - |
| | ANTAGE MB | | 1.5 | 1.5 | 1.5 | - | - | - | - | 1.5 | 1.5 | 1.5 | 1.5 | - | - | - |
| | ANTAGE RD | | 1.5 | 1.5 | 1.5 | 2.0 | 2.0 | 2.0 | 2.0 | 1.5 | 1.5 | 1.5 | 1.5 | 2.0 | 2.0 | 2.0 |
| Kneadability | Time taken until rubber composition is wound around roll (min) | | 30< | 10 | 10 | - | - | - | - | - | 10 | 10 | 10 | 10 | 10 | 10 |
| Evaluation of crosslinked rubber product | Hardness (relative value) | | - | 1.4 | 1.6 | 1.5 | 1.3 | 1.3 | 1.6 | 1.19 | 1.0 | 1.0 | 1.0 | 1.0 | 1.0 | 1.0 |
| | Tensile strength (relative value) | | - | 1.6 | 1.3 | 4.4 | 4.5 | 4.1 | 2.5 | 4.44 | 1.0 | 1.0 | 1.0 | 1.0 | 1.0 | 1.0 |
| | Elongation at break (relative value) | | - | 0.6 | 0.4 | 0.7 | 1.0 | 0.9 | 0.5 | 1.13 | 1.0 | 1.0 | 1.0 | 1.0 | 1.0 | 1.0 |
| | σ100 (relative value) | | - | 4.4 | 7.3 | 5.1 | 4.2 | 4.3 | 5.4 | 1.78 | 1.0 | 1.0 | 1.0 | 1.0 | 1.0 | 1.0 |
| | Fracture energy (relative value) | | - | 1.3 | 1.1 | 4.1 | 4.8 | 4.3 | 1.5 | 5.2 | 1.0 | 1.0 | 1.0 | 1.0 | 1.0 | 1.0 |

The rubber composition of the present embodiment has excellent kneadability and excellent physical properties after crosslinking.
On the other hand, the rubber composition of Comparative Example 1-1 having a water content of more than 15% was inferior in kneadability.
In addition, the crosslinked product obtained from the rubber composition of Comparative Example 2-1 in which the value obtained by dividing the piercing strength (N) by the thickness was less than 3 N/mm was inferior in fracture energy in the tensile test. The crosslinked product obtained from the rubber composition of Comparative Example 3-1 containing phosphorylated pulp having a fiber width of more than 1,000 nm instead of a fine fibrous cellulose was inferior in tensile strength, elongation at break, and fracture energy. Furthermore, in the rubber composition of Comparative Example 4-1 having a high water content, the value obtained by dividing the piercing strength (N) by the thickness (mm) was less than 3 N/mm.

Reference Signs List

10 Double drum dryer
1 Cylinder
2 Feed unit
3 Sheet-shaped mixture
4 Scraper
5 Composite material

**Claims**

1. A rubber composition comprising:

   a rubber component; and
   a fine fibrous cellulose having a fiber width of 1,000 nm or less, wherein
   the rubber composition has a water content of 15% or less,
   in a sheet composed of the rubber composition, a value obtained by dividing a piercing strength (N) by a thickness (mm) is 3 N/mm or more, and
   in the sheet composed of the rubber composition, a value obtained by dividing a piercing elongation (mm) by the thickness (mm) is 400 or less.

2. The rubber composition according to claim 1, wherein the sheet composed of the rubber composition has a hardness of 40 or more as measured in accordance with JIS K 6253-3:2012.

3. The rubber composition according to claim 1, wherein a content of the fine fibrous cellulose based on 100 parts by mass of the rubber component in the rubber composition is 1 part by mass or more and 200 parts by mass or less.

4. The rubber composition according to claim 1, further comprising a coarse cellulose fiber having a fiber width of more than 1 μm.

5. The rubber composition according to claim 1, wherein the rubber composition has a water content of 5% or less.

6. The rubber composition according to claim 1, wherein the sheet composed of the rubber composition has a thickness of 1 μm or more and 5,000 μm or less.

7. A crosslinked rubber product obtained by crosslinking and molding a rubber compound containing the rubber composition according to any one of claims 1 to 6 and a crosslinking agent.

8. The crosslinked rubber product according to claim 7, wherein the crosslinked rubber product is a tire.

9. A method for producing a rubber composition, comprising:

   a mixing step of mixing an aqueous dispersion of a fine fibrous cellulose having a fiber width of 1,000 nm or less with a rubber latex to obtain a dispersion containing a fine fibrous cellulose and a rubber component; and

a drying step of heating and drying the dispersion to obtain a rubber composition, wherein
the rubber composition has a water content of 15% or less,
in a sheet composed of the rubber composition, a value obtained by dividing a piercing strength (N) by a thickness (mm) is 3 N/mm or more, and
in the sheet composed of the rubber composition, a value obtained by dividing a piercing elongation (mm) by the thickness (mm) is 400 or less.

**10.** A method for producing a rubber compound, comprising a kneading step of kneading a rubber composition obtained by the production method according to claim 9 and a crosslinking agent.

**11.** A method for producing a crosslinked rubber product, comprising a crosslinking step of crosslinking and molding a rubber compound obtained by the production method according to claim 10.

*FIG. 1*

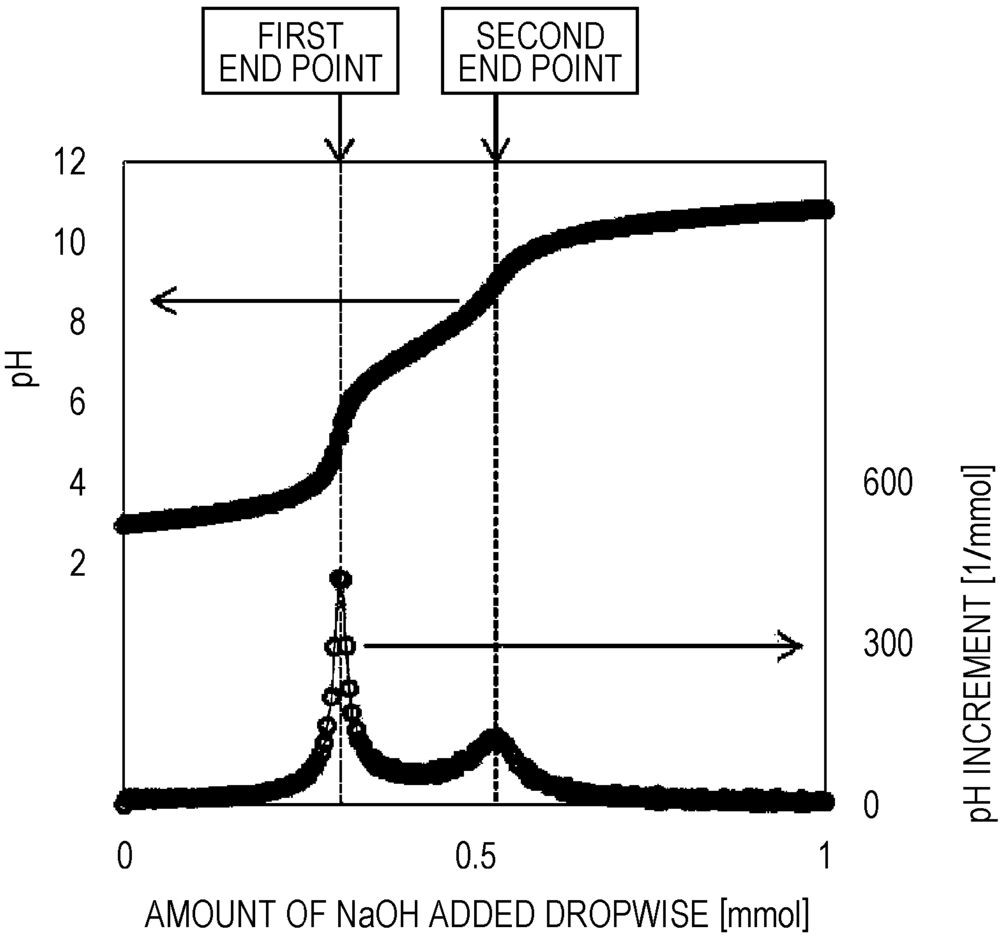
FIRST
END POINT
SECOND
END POINT
12
10
8
6
4
2
pH
600
300
0
pH INCREMENT [1/mmol]
0
0.5
1
AMOUNT OF NaOH ADDED DROPWISE [mmol]

FIG. 2

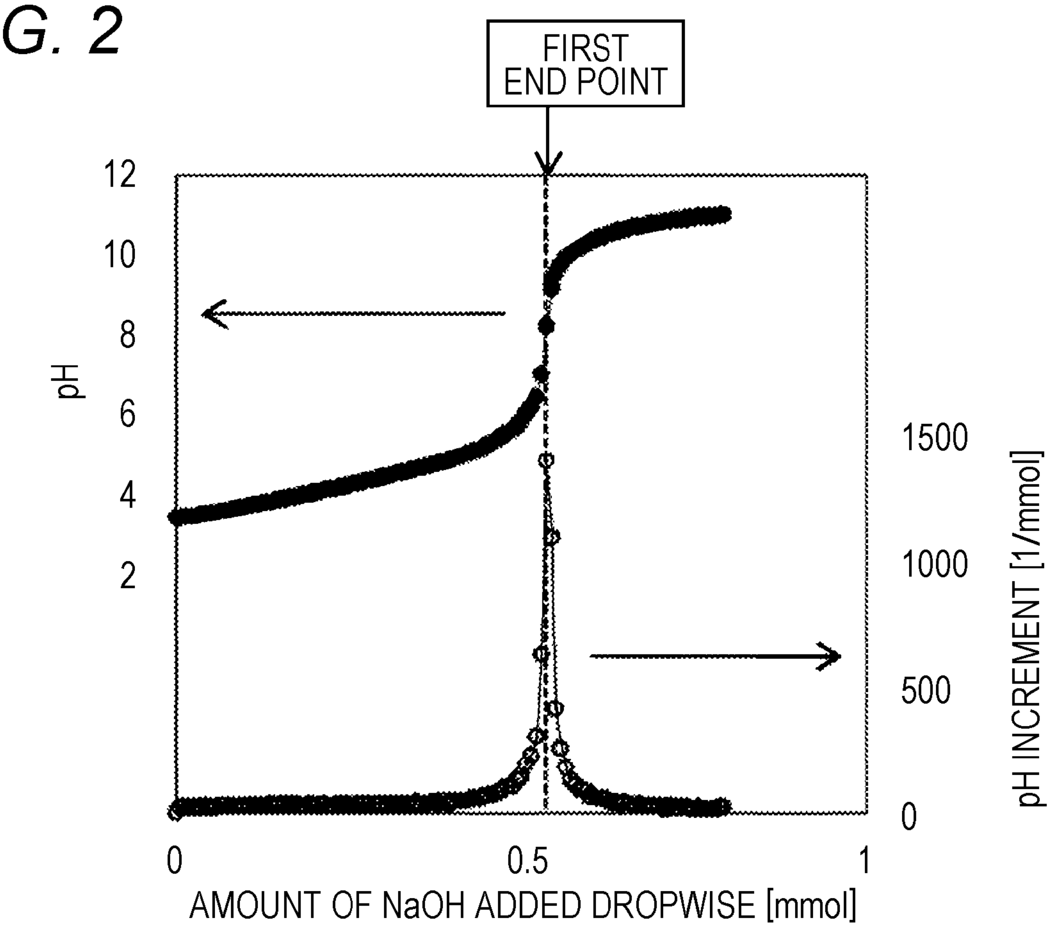
FIRST
END POINT
12
10
8
6
4
2
pH
1500
1000
500
0
pH INCREMENT [1/mmol]
0
0.5
1
AMOUNT OF NaOH ADDED DROPWISE [mmol]

FIG. 3

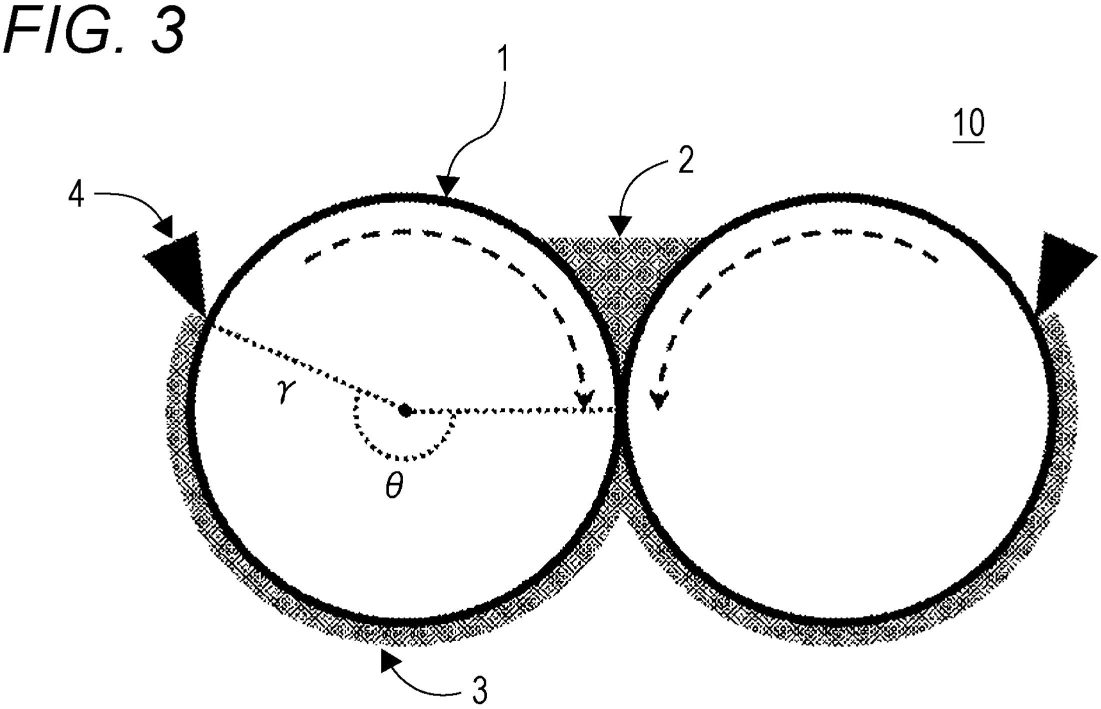
1
10
2
4
γ
θ
3

FIG. 4

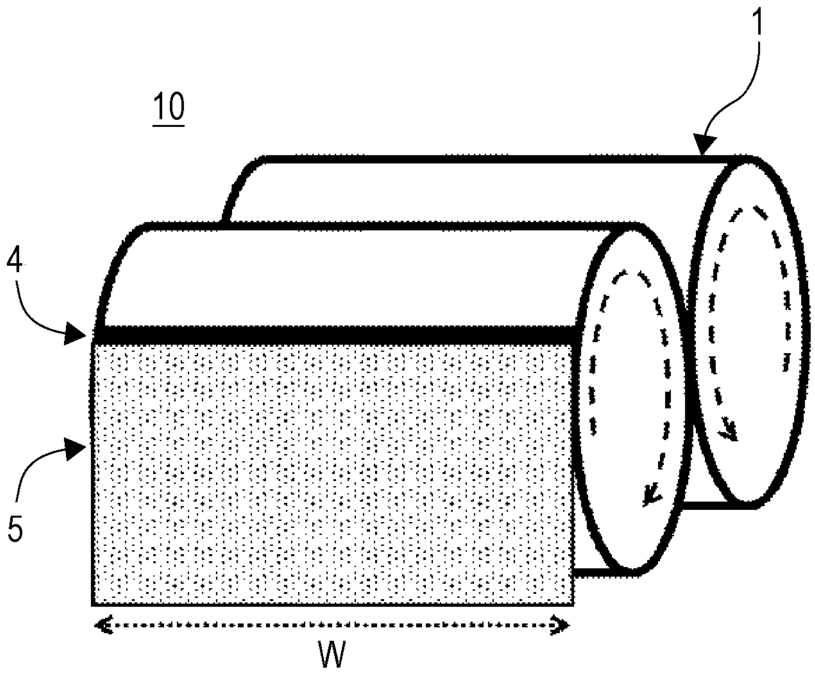

## INTERNATIONAL SEARCH REPORT

International application No.
**PCT/JP2024/031094**

### A. CLASSIFICATION OF SUBJECT MATTER

***C08L 21/00***(2006.01)i; ***B60C 1/00***(2006.01)i; ***C08J 3/20***(2006.01)i; ***C08L 1/02***(2006.01)i
FI: C08L21/00; C08L1/02; B60C1/00 Z; C08J3/20 B CEQ

According to International Patent Classification (IPC) or to both national classification and IPC

### B. FIELDS SEARCHED

Minimum documentation searched (classification system followed by classification symbols)

C08K3/00-13/08; C08L1/00-101/14; B60C1/00; C08J3/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | WO 2022/177014 A1 (ASAHI KASEI KABUSHIKI KAISHA) 25 August 2022 (2022-08-25) claims, paragraphs [0109]-[0110], examples | 1-3, 5-11<br>4 |
| X<br>Y | WO 2020/153255 A1 (SEIKO PMC CORPORATION) 30 July 2020 (2020-07-30) claims, paragraph [0034], example 8 | 1-3, 5-6, 9<br>4 |
| Y | JP 2021-84925 A (ASAHI KASEI KABUSHIKI KAISHA) 03 June 2021 (2021-06-03) claims, paragraph [0129] | 4 |
| P, X | WO 2024/142813 A1 (TOAGOSEI CO., LTD.) 04 July 2024 (2024-07-04) claims, example 2 | 1-3, 5-11 |
| A | JP 2021-191841 A (OJI HOLDINGS CORPORATION) 16 December 2021 (2021-12-16) | 1-11 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 October 2024** | **29 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/031094**

| Patent document cited in search report | Publication date (day/month/year) | Patent family member(s) | Publication date (day/month/year) |
|---|---|---|---|
| WO 2022/177014 A1 | 25 August 2022 | US 2024/0124690 A1<br>claims, paragraphs [0171]-[0175], examples<br>EP 4296077 A1<br>CN 116783077 A<br>KR 10-2023-0129563 A | |
| WO 2020/153255 A1 | 30 July 2020 | US 2021/0292492 A1<br>claims, paragraph [0040], example 8<br>CN 112424265 A | |
| JP 2021-84925 A | 03 June 2021 | (Family: none) | |
| WO 2024/142813 A1 | 04 July 2024 | (Family: none) | |
| JP 2021-191841 A | 16 December 2021 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021123639 A
- JP 2022508946 A


### Non-patent literature cited in the description


- **SEAGAL et al.** *Textile Research Journal*, 1959, vol. 29, 786